# EUROPEAN PATENT APPLICATION

(11) **EP 4 750 154 A1**
(43) Date of publication of application: **27.05.2026**
(21) Application number: 23946078.5
(22) Date of filing: 21.07.2023
(51) Int. Cl.: H04W 36/08

(54) **CELL HANDOVER METHOD, NETWORK DEVICE AND TERMINAL DEVICE**

(71) Applicant: Quectel Wireless Solutions Co., Ltd., Shanghai 201601 (CN)
(72) Inventor: ZHAO, Zheng, Shanghai 201601 (CN); YANG, Zhongzhi, Shanghai 201601 (CN)
(74) Representative: Murgitroyd & Company
(86) International application number: PCT/CN2023/108636
(87) International publication number: WO 2025/019984

(57) **Abstract**

The present application provides a method for cell handover, a network device, and a terminal device, which is conducive to reducing the frequency of signaling interaction and lowering the signaling overhead during cell handover in an NTN system. This method is applied to a handover from a source cell corresponding to a source network device to a target cell corresponding to a target network device, including: determining, by the source network device, a first terminal device group in a first terminal device set that executes the cell handover, where the first terminal device set includes one or more first terminal device groups; and sending, by the source network device, a first message group to the target network device, where the first message group is used to indicate handover requests of all terminal devices in the first terminal device group, where the first message group includes second common information related to the terminal devices in the first terminal device group and first common information related to the source cell and/or the target cell.

## Description

### TECHNICAL FIELD

The present application relates to the field of communication technology, and more specifically to a method for cell handover, a network device, and a terminal device.

### BACKGROUND

Some communication systems (such as non-terrestrial network (non-terrestrial network, NTN) systems) have characteristics of high device mobility and wide cell coverage. In cell handover procedures of such communication systems, a large number of terminal devices may execute handover simultaneously, resulting in a sharp increase in transmission signaling between network devices and between network devices and terminal devices, thereby leading to congestion.

### SUMMARY

The present application provides a method for cell handover, a network device, and a terminal device. The following describes various aspects involved in the embodiments of the present application.

According to a first aspect, a method for cell handover is provided, applied to a handover from a source cell corresponding to a source network device to a target cell corresponding to a target network device, including: determining, by the source network device, a first terminal device group in a first terminal device set that executes the cell handover, where the first terminal device set includes one or more first terminal device groups; and sending, by the source network device, a first message group to the target network device, where the first message group is used to indicate handover requests of all terminal devices in the first terminal device group, where the first message group includes second common information related to the terminal devices in the first terminal device group and first common information related to the source cell and/or the target cell.

According to a second aspect, a method for cell handover is provided, applied to a handover from a source cell corresponding to a source network device to a target cell corresponding to a target network device, including: receiving, by the target network device, a first message group sent by the source network device, where the first message group is used to indicate handover requests of all terminal devices in a first terminal device group, the first terminal device group is any terminal device group in a first terminal device set that executes the cell handover, and the first terminal device set includes one or more first terminal device groups, where the first message group includes second common information related to the terminal devices in the first terminal device group and first common information related to the source cell and/or the target cell.

According to a third aspect, a method for cell handover is provided, applied to a handover from a source cell corresponding to a source network device to a target cell corresponding to a target network device, including: determining, by a terminal device, a first terminal device group to which the terminal device belongs, where the first terminal device group is any terminal device group in a first terminal device set that executes the cell handover, and the first terminal device set includes one or more first terminal device groups.

According to a fourth aspect, a network device is provided, where the network device is a source network device, and the source network device includes: a determining unit, configured to determine a first terminal device group in a first terminal device set that executes a cell handover, where the first terminal device set includes one or more first terminal device groups; and a sending unit, configured to send a first message group to a target network device, where the first message group is used to indicate handover requests of all terminal devices in the first terminal device group, where the first message group includes second common information related to the terminal devices in the first terminal device group and first common information related to one or more of a source cell corresponding to the source network device or a target cell corresponding to the target network device.

According to a fifth aspect, a network device is provided, where the network device is a target network device, and the target network device includes: a receiving unit, configured to receive a first message group sent by a source network device, where the first message group is used to indicate handover requests of all terminal devices in a first terminal device group, the first terminal device group is any terminal device group in a first terminal device set that executes a cell handover, and the first terminal device set includes one or more first terminal device groups, where the first message group includes second common information related to the terminal devices in the first terminal device group and first common information related to one or more of a source cell corresponding to the source network device or a target cell corresponding to the target network device.

According to a sixth aspect, a terminal device is provided, including: a determining unit, configured to determine a first terminal device group to which the terminal device belongs, where the terminal device executes a cell handover from a source cell corresponding to a source network device to a target cell corresponding to a target network device, the first terminal device group is any terminal device group in a first terminal device set that executes the cell handover, and the first terminal device set includes one or more first terminal device groups.

According to a seventh aspect, an apparatus for communication is provided, including a memory and a processor, where the memory is configured to store a program, and the processor is configured to invoke the program in the memory to perform the method according to any one of the first aspect to the third aspect.

According to an eighth aspect, an apparatus is provided, including a processor, where the processor is configured to invoke a program from a memory to perform the method according to any one of the first aspect to the third aspect.

According to a ninth aspect, a chip is provided, including a processor, where the processor is configured to invoke a program from a memory to cause a device installed with the chip to perform the method according to any one of the first aspect to the third aspect.

According to a tenth aspect, a computer-readable storage medium storing a program is provided, where the program causes a computer to perform the method according to any one of the first aspect to the third aspect.

According to an eleventh aspect, a computer program product is provided, including a program, where the program causes a computer to perform the method according to any one of the first aspect to the third aspect.

According to a twelfth aspect, a computer program is provided, where the computer program causes a computer to perform the method according to any one of the first aspect to the third aspect.

In the embodiments of the present application, the first terminal device group is determined through two grouping operations performed by the source network device based on the common information for handover requests at both a cell level and a terminal device level. During the execution of the cell handover, the source network device may send the handover requests of all terminal devices in the first terminal device group in the form of the first message group to the target terminal device. The first message group combines the handover request information of the plurality of terminal devices based on the common information at different levels, which helps to avoid the repeated transmission of the same information, reduces the frequency of signaling interactions between network devices, and decreases signaling overhead.

### BRIEF DESCRIPTION OF THE DRAWINGS

FIG. 1 is a wireless communication system to which an embodiment of the present application is applied.
FIG. 2 is a schematic diagram of a scenario of a terrestrial fixed cell to which an embodiment of the present application is applied.
FIG. 3 is a schematic diagram of a scenario of a terrestrial moving cell to which an embodiment of the present application is applied.
FIG. 4 is a schematic diagram of a scenario of feed link handover to which an embodiment of the present application is applied.
FIG. 5 is a cell handover procedure according to an embodiment of the present application.
FIG. 6 is a schematic flowchart of a method for cell handover according to an embodiment of the present application.
FIG. 7 shows information content included in a first message group in the method shown in FIG. 6.
FIG. 8 is a schematic structural diagram of various possible implementations of a first sub-message of the first message group.
FIG. 9 is a schematic structural diagram of a possible implementation of a second sub-message of the first message group.
FIG. 10 is a schematic structural diagram of a possible implementation of the first message group.
FIG. 11 is a schematic structural diagram of another possible implementation of the first message group.
FIG. 12 is a schematic structural diagram of still another possible implementation of the first message group.
FIG. 13 is a schematic diagram of a possible implementation of the method shown in FIG. 6.
FIG. 14 shows information content included in a second message group.
FIG. 15 is a schematic structural diagram of various possible implementations of a first sub-message of the second message group.
FIG. 16 is another schematic flowchart of a possible implementation of the method shown in FIG. 6.
FIG. 17 is a schematic flowchart of a possible implementation of grouping information issuing.
FIG. 18 is a schematic flowchart of another possible implementation of grouping information issuing.
FIG. 19 is a schematic flowchart of still another possible implementation of grouping information issuing.
FIG. 20 is a schematic flowchart of yet another possible implementation of grouping information issuing.
FIG. 21 is a comparison diagram of a related technology and an embodiment of the present application.
FIG. 22 is a schematic structural diagram of a network device according to an embodiment of the present application.
FIG. 23 is a schematic structural diagram of another network device according to an embodiment of the present application.
FIG. 24 is a schematic structural diagram of a terminal device according to an embodiment of the present application.
FIG. 25 is a schematic structural diagram of an apparatus for communication according to an embodiment of the present application.

### DETAILED DESCRIPTION OF THE EMBODIMENTS

The following describes technical solutions in the embodiments of the present application with reference to the accompanying drawings in the embodiments of the present application. Apparently, the described embodiments are part of but not all of the embodiments of the present application. For the embodiments of the present application, all other embodiments obtained by a person of ordinary skill in the art based on the embodiments of the present application without creative efforts shall fall within the protection scope of the present application.

The embodiments of the present application may be applied to various communication systems. For example, the embodiments of the present application may be applied to a global system of mobile communication (global system of mobile communication, GSM) system, a code division the plurality of access (code division multiple access, CDMA) system, a wideband code division the plurality of access (wideband code division multiple access, WCDMA) system, a general packet radio service (general packet radio service, GPRS) system, a long term evolution (long term evolution, LTE) system, an advanced long term evolution (advanced long term evolution, LTE-A) system, a new radio (new radio, NR) system, an evolution system of the NR system, an LTE-based access to unlicensed spectrum (LTE-based access to unlicensed spectrum, LTE-U) system, an NR-based access to unlicensed spectrum (NR-based access to unlicensed spectrum, NR-U) system, an NTN system, a universal mobile telecommunication system (universal mobile telecommunication system, UMTS), a wireless local area networks (wireless local area networks, WLAN), a wireless fidelity (wireless fidelity, WiFi), and a 5^{th}-generation (5th-generation, 5G) system. The embodiments of the present application may be further applied to another communication system such as a future communication system. The future communication system may be, for example, a 6^{th}-generation (6th-generation, 6G) mobile communication system, or a satellite communication system, etc.

Conventional communication systems support a limited number of connections and are easy to implement. However, with the development of communication technologies, the communication system may not only support conventional cellular communication, but also support one or more other types of communication. For example, the communication system may support one or more of device to device (device to device, D2D) communication, machine to machine (machine to machine, M2M) communication, machine type communication (machine type communication, MTC), enhanced MTC communication (enhanced MTC, eMTC), vehicle to vehicle (vehicle to vehicle, V2V) communication, vehicle to everything (vehicle to everything, V2X) communication, and the like. The embodiments of the present application may also be applied to communication systems supporting the above communication types.

The communication system in the embodiments of the present application may be applied to a carrier aggregation (carrier aggregation, CA) scenario, a dual connectivity (dual connectivity, DC) scenario, or a standalone (standalone, SA) fabric scenario.

The communication system in the embodiments of the present application may be applied to an unlicensed spectrum. The unlicensed spectrum may also be considered as a shared spectrum. Alternatively, the communication system in the embodiments of the present application may also be applied to a licensed spectrum. The licensed spectrum may also be considered as a dedicated spectrum.

The embodiments of the present application may be applied to a terrestrial network (terrestrial networks, TN) system or may be applied to an NTN system. As an example, the NTN system may include a 4G-based NTN system, an NR-based NTN system, an internet of things (internet of things, IoT)-based NTN system, and a narrow band internet of things (narrow band internet of things, NB-IoT)-based NTN system.

The communication system may include one or more terminal devices. The terminal device mentioned in the embodiments of the present application may also be referred to as user equipment (user equipment, UE), an access terminal, a subscriber unit, a subscriber station, a mobile station (mobile station, MS), a mobile terminal (mobile Terminal, MT), a remote station, a remote terminal, a mobile device, a user terminal, a terminal, a wireless communication device, a user agent, a user apparatus, or the like.

In some embodiments, the terminal device may be a station (STATION, ST) in the WLAN. In some embodiments, the terminal device may be a cellular phone, a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a computing device or another possessing device connected to a wireless modem, a vehicle-mounted device, a wearable device, a terminal device in a next-generation communication system (such as the NR system), or a terminal device in a future evolved public land mobile network (public land mobile network, PLMN) network.

In some embodiments, the terminal device may be a device that provides voice and/or data connectivity to a user. For example, the terminal device may be a handheld device or a vehicle-mounted device having a wireless connection function, or the like. As some specific examples, the terminal device may be a mobile phone (mobile phone), a pad (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in smart home (smart home), etc.

In some embodiments, the terminal device may be deployed on land. For example, the terminal device may be deployed indoors or outdoors. In some embodiments, the terminal device may be deployed on a water surface, for example, deployed on a ship. In some embodiments, the terminal device may be deployed in the air, for example, deployed on an aircraft, a balloon, and a satellite.

In addition to the terminal device, the communication system may further include one or more network devices. The network device in the embodiments of the present application may be a device configured to communicate with the terminal device, and the network device may also be referred to as an access network device or a radio access network device. The network device may be, for example, a base station. The network device in the embodiments of the present application may refer to a radio access network (radio access network, RAN) node (or device) that accesses the terminal device to a wireless network. The base station may broadly cover devices having the following various names as follows, or may be interchanged with the devices having the following names, such as a node B (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master station MeNB, a secondary station SeNB, a multistandard radio (MSR) node, a home base station, a network controller, an access node, a wireless node, an access point (access point, AP), a transmission node, a transceiver node, a base band unit (base band unit, BBU), a remote radio unit (remote radio unit, RRU), an active antenna unit (active antenna unit, AAU), a remote radio unit (remote radio unit, RRH), a central unit (central unit, CU), a distributed unit (distributed unit, DU), a positioning node, and the like. The base station may be a macro base station, a micro base station, a relay node, a donor node or the like, or a combination thereof. The base station may further refer to a communication module, a modem, or a chip disposed in the foregoing device or apparatus. The base station may also be a mobile switching center and a device that undertakes a function of the base station in D2D, V2X, M2M communication, a network side device in the 6G network, a device that undertakes a function of the base station in a future communication system, etc. The base station may support networks of the same technology or different access technologies. A specific technology adopted by the network device and a specific form of the device are not limited in embodiments of the present application.

The base station may be fixed or mobile. For example, a helicopter or drone may be configured to serve as a mobile base station, and one or more cells move according to the location of the mobile base station. In other examples, a helicopter or drone may be configured to serve as a device in communication with another base station.

In some deployments, the network device in the embodiments of the present application may be a CU or a DU, or the network device includes a CU and a DU. The gNB may also include an AAU.

By way of example rather than limitation, the network device in the embodiments of the present application may have a mobility characteristic, for example, the network device may be a mobile device. In some embodiments of the present application, the network device may be a satellite or a balloon station. In some embodiments of the present application, the network device may be a base station disposed at a location such as land, water. etc.

In the embodiments of the present application, the network device may provide services for a cell, and the terminal device communicates with the network device via a transmission resource (e.g., a frequency domain resource, or a spectrum resource) used by the cell. The cell may be a cell corresponding to the network device (e.g., a base station), and the cell may belong to a macro base station or a base station corresponding to a small cell (small cell). The small cell may include a metro cell (metro cell), a micro cell (micro cell), a pico cell (pico cell), a femto cell (femto cell), etc., and these small cells have the characteristics of a small coverage and a low transmission power, which are suitable for providing a high-rate data transmission service.

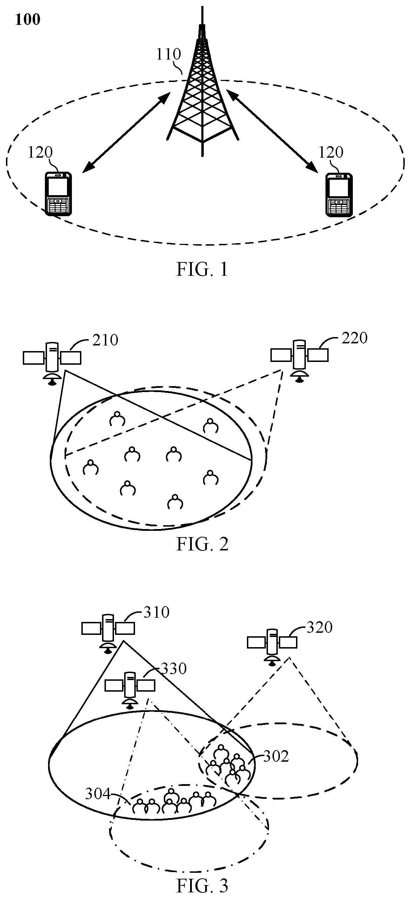

For example, FIG. 1 is a schematic architectural diagram of a communication system according to an embodiment of the present application. As shown in FIG. 1, the communication system 100 may include a network device 110, and the network device 110 may be a device that communicates with a terminal device 120 (or referred to as a communication terminal or a terminal). The network device 110 may provide communication coverage for a particular geographic area and may communicate with a terminal device located within the coverage area.

FIG. 1 exemplarily shows a network device and two terminal devices. In some embodiments of the present application, the communication system 100 may include a plurality of network devices, and the coverage of each network device may include other numbers of terminal devices, which is not limited in embodiments of the present application.

In the embodiments of the present application, the wireless communication system shown in FIG. 1 may further include another network entity such as a mobility management entity (mobility management entity, MME), an access and mobility management function (access and mobility management function, AMF), etc., which is not limited in embodiments of the present application.

It should be understood that a device having a communication function in the network/system in embodiments of the present application may be referred to as a communication device. Taking the communication system 100 shown in FIG. 1 as an example, the communication device may include the network device 110 and the terminal device 120 having the communication function, and the network device 110 and the terminal device 120 may be the specific devices described above and are not described here again. The communication device may further include another device in the communication system 100, for example, another network entity such as a network controller, a mobility management entity, etc., which is not limited in embodiments of the present application.

For ease of understanding, some related technical knowledge in the embodiments of the present application is first described. The following related technologies may be arbitrarily combined with the technical solutions of the embodiments of the present application as an optional solution, which all belong to the protection scope of the embodiments of the present application. The embodiments of the present application include at least some of the following content.

With the development of communication technology, communication systems are gradually integrating the market potential of satellite and terrestrial network infrastructure. For example, as 5G networks become increasingly prevalent and saturated in urban areas, in order to enhance the utilization and coverage of 5G networks so as to enable users and IoT devices in remote areas, deserts, and oceanic regions to access 5G networks, the NTN previously mentioned has been introduced.

NTN utilizes non-terrestrial devices such as satellites and high-altitude platforms to relay wireless signals. Compared to terrestrial cells, the adoption of NTN may reduce costs and achieve sparse coverage in vast areas with low service traffic. Taking satellites as an example, since satellites operate at high orbits, ranging from over 600 kilometers to 35,000 kilometers, a single satellite is capable of covering a large area of the Earth's surface, thereby enabling global coverage with a limited number of satellites.

In an NTN system, the cells projected by satellites onto the ground may be relatively fixed with respect to the ground or may move with the satellites. Cells that are relatively stationary with respect to the ground may be referred to as quasi-Earth fixed cells, terrestrial fixed cells, or the like. Cells that move with the satellites may be referred to as quasi-Earth moving cells, terrestrial moving cells, or the like.

Regardless of the communication scenario, satellite communication systems all have the characteristics of high mobility, long propagation delays, and wide cell coverage. Conventional terrestrial mobile communication technologies struggle to adapt to satellite communication scenarios, so the 3^{rd} generation partnership project (3rd generation partnership project, 3GPP) has conducted protocol enhancement research for NTN based on the existing 5G air interface in R17. In issues related to mobility enhancement, the focus has primarily been on aspects such as cell handover (handover, HO) and cell reselection. Some protocol enhancement solutions are proposed in R17 based on potential issues and requirements that may arise when terrestrial technologies are applied to NTN, but these solutions may only address part of the problems. Further research on mobility enhancement solutions for NTN is still required in R18. Current discussions in proposals related to NTN mobility enhancement are centered on reducing and improving process signaling overhead.

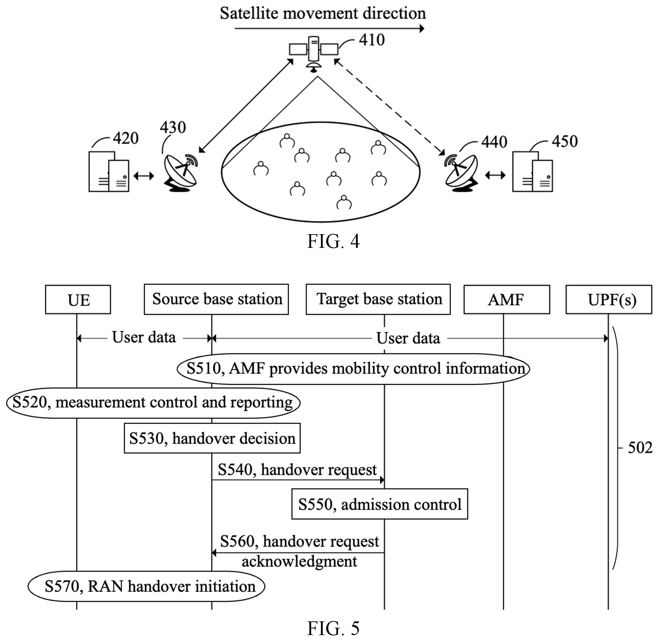

The following is a schematic introduction to NTN cell handover scenarios, with reference to FIG. 2 to FIG. 4. FIG. 2 is a schematic diagram of a scenario of a terrestrial fixed cell, FIG. 3 is a schematic diagram of a scenario of a terrestrial moving cell, and FIG. 4 is a schematic diagram of a scenario of feeder link handover.

In the scenario of the terrestrial fixed cell, after a current satellite completes its service to a fixed cell, another nearby satellite takes over to provide the service for all users within the cell. As shown in FIG. 2, after satellite 210 completes its service to the fixed cell, satellite 220 takes over the service for all users in the cell, requiring these users to execute a handover from satellite 210 to satellite 220 for providing the service.

In the terrestrial moving cell scenario, because a coverage area of the satellite cell moves with the satellite, users at different locations may exit a coverage area of a source cell at different times and may execute the handover to different (candidate) target satellites at different times. As shown in FIG. 3, as satellite 310 moves, all users in regions 302 and 304 need to execute a cell handover. Specifically, users in region 302 may execute the handover to satellite 320, while users in region 304 may execute the handover to satellite 330.

In the NTN system, a radio link between the satellite and the gateway (gateway station) may be referred to as a feeder link. In the scenario of the feeder link handover, since the satellite exits a service range of a source gateway station and gradually enters a service range of a destination gateway station, a handover of a serving base station of users may also be triggered. As shown in FIG. 4, since satellite 410 moves in a direction indicated in FIG. 4, satellite 410 will exit a service range of gateway station 430 and gradually enter a service range of gateway station 440. In this case, all users within the satellite cell switch their serving base station from base station 420 to base station 450.

In the NTN system, due to the mobility of satellites, user handovers occur much more frequently than those on the ground. Furthermore, due to the regularity of satellite movement, users often execute the handover to the same satellite in groups. For example, in the terrestrial fixed cell shown in FIG. 2, users in a cell served by the departing satellite 210 may execute the handover to the approaching satellite 220 at the same time when satellite 210 completes its service. For another example, in the terrestrial moving cell shown in FIG. 3, a group of users located at the edge of the service area and geographically close to each other may have a high probability of executing the handover to the same satellite. For another example, in the feeder link handover shown in FIG. 4, since satellite 410 exceeds a service range of an original gateway, users within the cell may need to perform the feeder link handover simultaneously.

The cell handover primarily occurs in a radio resource control (radio resource control, RRC) CONNECTED (CONNECTED) state of a terminal device, allowing the terminal device to complete the handover from a current serving cell to a target cell due to mobility. Generally, cell handover technology is mainly used for users in the RRC CONNECTED state, but the handover is primarily completed by a network side. In terrestrial networks, relevant technical standards for a user handover procedure defined by 3GPP are already well established.

The handover procedure involves three phases: handover preparation, handover execution, and handover completion. According to relevant technical standards, during signaling interaction and exchange of handover request and acknowledgement information for the terminal device between a source base station (e.g., source gNB) and a target base station (e.g., target gNB) in the handover preparation phase, it is required to send corresponding information for each terminal device and execute the handover preparation and acknowledgement process one by one. For ease of understanding, the following takes the cell handover procedure of a UE as an example to illustrate an interaction process of the handover preparation (handover preparation) phase with reference to FIG. 5.

Refer to FIG. 5, the handover preparation phase 502 includes data transmission in an early stage and operations S510 to S560. In the early stage of the cell handover preparation phase, user data (user data) is transmitted between the UE and a source base station, as well as between the source base station and user plane functions (user plane functions, UPF(s)).

At operation S510, an AMF provides (provide) mobility control information (mobility control information) to the source base station and a target base station.

At operation S520, measurement control and reports (measurement control and reports) for a cell handover are transmitted between the UE and the source base station.

At operation S530, the source base station makes a handover decision (handover decision).

At operation S540, the source base station sends a handover request (handover request) to the target base station.

At operation S550, the target base station performs admission control (admission control). Admission control generally serves two purposes, i.e., determining an eligibility of the UE to access a target cell, and reserving some resources for the UE on the target base station side based on a configuration of the UE.

At operation S560, the target base station sends a handover request acknowledgment (handover request acknowledgment) to the source base station.

At operation S570, the source base station and the UE perform radio access network (radio access network) handover initiation (handover initiation).

The signaling interaction and admission control method shown in FIG. 5 are applicable to terrestrial networks, as handovers in terrestrial networks are triggered by terminal device mobility and occur infrequently. However, in the NTN system, if the solution shown in FIG. 5 is used, it would lead to significant signaling overhead between base stations and between base stations and users, and cause congestion. As shown in FIG. 2 to FIG. 4, in various cell handover scenarios of the NTN system, the movement of satellites may cause a large number of users within the cell to execute the cell handover. Due to the high speed of satellite movement, these numerous cell handovers would be frequent and unavoidable. If handover preparation is based on each individual user, it would result in a high frequency of signaling interactions.

It should be noted that the above case of significant signaling overhead and high signaling interaction frequency during the cell handover preparation phase due to satellite mobility in the NTN system is just one example. The embodiments of the present application may be applied to any type of communication scenario where network device mobility leads to a sharp increase in handover signaling.

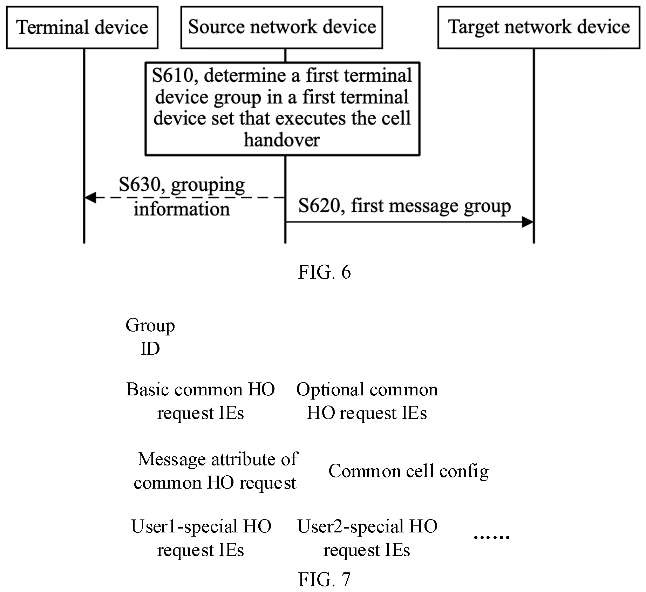

To address the above problems, an embodiment of the present application provides a method for cell handover. This method improves the relevant handover procedure based on the concepts of information sharing and multi-user message aggregation to reduce signaling overhead and interaction frequency. This method is applicable to two main scenarios proposed by 3GPP, i.e., the NTN satellite mobile network scenario and the feeder link handover scenario. The following provides a detailed description of a method embodiment of the embodiments of the present application with reference to FIG. 6.

FIG. 6 introduces the method for cell handover from the perspective of interaction between a source network device, a target network device, and a terminal device. The method for cell handover is applied to a handover from a source cell corresponding to the source network device to a target cell corresponding to the target network device. The dashed line indicates that the process is optional or that timing for executing the process is optional.

The terminal device refers to any type of terminal device as described above. In some embodiments, the terminal device is a communication device served by satellites in the NTN system. In some embodiments, the terminal device is a communication device with a low service transmission rate. For example, the terminal device is an IoT device.

The source network device is a communication device currently providing service to the terminal device. In some embodiments, the source network device may be a base station providing service to the terminal device via satellites in the NTN system. In some embodiments, the source network device may be a non-satellite mobile network device. For example, the source network device is a base station installed on a low-altitude rotorcraft.

The target network device is a network device that provides service to the terminal device after the source network device stops providing service. In some embodiments, the source network device may autonomously determine the target network device. For example, in the cell handover procedure of the NTN system, the source network device may determine the target network device corresponding to the terminal device without a measurement report from the terminal device.

Typically, the target network device is a network device whose trajectory may be predicted. For example, the target network device may be a satellite in the NTN system. The source network device may determine the target network device that provides service to the terminal device based on ephemeris information. For another example, the target network device may be a non-satellite mobile network device. The source network device may determine the target network device that provides service to the terminal device based on a preset parameter.

In some embodiments, after determining the target network device, the source network device sends handover preparation to the target network device. Upon receiving a handover response from the target network device, the source network device sends a handover initiation command to the terminal device.

Referring to FIG. 6, at operation S610, the source network device determines a first terminal device group in a first terminal device set that executes the cell handover.

The cell handover refers to the handover from the source cell corresponding to the source network device to the target cell corresponding to the target network device, as previously described. In some embodiments, terminal devices within the source cell in which the target cell serves as a handover target may execute the cell handover procedure to hand over their serving cell from the source cell to the target cell.

In some embodiments, the source network device may perform handover prediction and grouping for the terminal devices executing the cell handover during the handover decision phase shown in FIG. 5, thereby determining the first terminal device group. For example, the source network device may predict handover targets and corresponding handover timings for the terminal devices. For another example, the source network device may categorize terminal devices that (are likely to) hand over to the same target network device at the same time into a single group based on handover prediction results of the terminal devices.

Exemplarily, in the NTN system, the source network device may make handover prediction/decision based on information such as motion trajectories of the serving satellite and neighbor satellites, as well as positions of the terminal devices.

Exemplarily, the source network device may possess the capability to perform proactive handover predictions for terminal devices and group them based on the handover prediction results for the terminal devices.

The first terminal device set may be a set of terminal devices that execute the handover to the target cell at the same time within the source cell. Due to the same target cell, the terminal devices within this set may share information about the source cell/target cell. The information related to the source cell/target cell may be referred to as first common information. In other words, the source network device may perform diversity for terminal devices based on characteristics of the NTN handover interaction scenario, allowing terminal devices within the group to share part of handover request information.

The source network device may categorize terminal devices in the source cell based on the target cell corresponding to the terminal devices and/or the time for the terminal devices to execute the cell handover. For example, terminal devices with the same target cell may be categorized into the same set. For another example, terminal devices that execute the handover to the same target cell at the same occasion belong to the same terminal device set. For another example, terminal devices that execute the handover to the same target cell within a close timeframe belong to the same set, where "close timeframe" refers to sharing the same handover window occasion. For another example, terminal devices that execute the handover at different occasions belong to different terminal device sets. For another example, in the NTN network, terminal devices that execute the handover to the same target satellite at the same occasion may be categorized into the same set.

Exemplarily, the source network device may also categorize terminal device sets based on different criteria according to actual conditions. For example, in the grouping of the terrestrial moving cell scenario, the source network device may use actual geographical locations of terminal devices as the standard for grouping. For another example, in the grouping of the terrestrial fixed cell scenario, the source network device may use distances between terminal devices and the cell center as the standard for grouping.

In some embodiments, the source cell may include one or more terminal device sets. For example, terminal devices in the fixed cell in FIG. 2 may execute the handover to satellite 220 at the same occasion, and these terminal devices belong to the same set. For another example, based on different target cells, terminal devices in region 302 in FIG. 3 may belong to the same terminal device set, and terminal devices in region 304 may belong to another terminal device set.

The first terminal device group may be a set of terminal devices within the first terminal device set that have the same handover request information. The same information related to the terminal devices may be referred to as second common information. Since the terminal devices have the same information, these terminal devices may not only share shared information about a cell of the first terminal device set but also share user-level information.

By performing two grouping operations corresponding to the first terminal device set and the first terminal device group, respectively, cell-level information and user-level information shared by the plurality of terminal devices may be obtained. The information may serve as common information used for the interaction of handover requests and acknowledgements of the plurality of terminal devices between the source network device and the target network device, which needs to be transmitted only once, thereby reducing signaling overhead.

The first terminal device set may include one or more terminal device groups. The first terminal device group may be any terminal device group within the first terminal device set.

In some embodiments, one or more first terminal device groups within the first terminal device set may be determined based on one or more of: a geographical location of the terminal device, an RF range supported by the terminal device, a type of the terminal device, or a capability of the terminal device to access different access networks.

As an embodiment, terminal devices with adjacent geographical locations or similar RF capabilities may share some configurations in a radio resource management (radio resource management, RRM) measurement report. For example, these configurations may be used to indicate cell measurement results, such as reference signal received power (reference signal received power, RSRP) and reference signal strength indication (reference signal strength indication, RSSI). For another example, terminal devices that are geographically close may have same candidate measurement cell configurations in the RMM measurement configuration. It should be noted that relevant configuration information for terminal devices should be known to the network device, allowing the network device to regroup based directly on terminal device configuration information. The statement "terminal devices that are geographically close may have same candidate measurement cell configurations in the RMM measurement configuration" serves as a reason for terminal devices to have the same configuration information rather than a standard for grouping.

As an embodiment, terminal devices of the same or similar type may have similar radio network access capabilities. For example, smartphones or IoT devices may have similar capabilities for supporting radio access technology (radio access technology, RAT).

In summary, the source network device may categorize terminal devices that (are likely to) hand over to the same target network device at the same (or adjacent) time into the same terminal device set. All terminal devices within this set share information of the target network device. Furthermore, terminal devices may be regrouped within this set, and the primary goal of regrouping is to categorize terminal devices that have same user-level parameter configurations into the same group as much as possible. This allows terminal devices within the same group to not only share cell-level information but also share a portion of user-level information.

To identify each terminal device group resulting from the two grouping operations, the source network device may assign the same group identity (identity, ID) to terminal devices belonging to the same terminal device group. This group ID should be unique within the source cell to facilitate global indexing of the unique terminal device group in conjunction with the source cell ID.

At operation S620, the source network device sends a first message group to the target network device.

The first message group is used to indicate handover requests of all terminal devices in the first terminal device group and may also be referred to as a group handover request (GroupHandoverRequest, or GroupHOReq for short) message group. In some embodiments, the source network device may generate the corresponding first message group based on user configuration information, information about the source cell, etc.

The first message group may include the handover request information for all terminal devices within the first terminal device group. Due to size limitations, the information of all the terminal devices in the first terminal device group typically cannot be included in a single message. Therefore, handover preparation information for the terminal devices in the same group may be carried in a plurality of sub-messages, so as to form a message group. As previously mentioned, information that terminal devices may share only needs to be sent once, allowing for restructuring of a signaling format for the handover request. Through grouping and signaling format restructuring, signaling overhead generated during the handover preparation phase in the NTN satellite network may be reduced.

The first message group may include identity information (e.g., group ID) of the first terminal device group to facilitate indexing.

The first message group may include first common information related to the source cell and/or target cell, as well as second common information related to the terminal devices. The first common information may also be referred to as cell-level information or basic common information, and the second common information may also be referred to as user-level information or optional common information.

In some embodiments, the first common information includes basic shared information among terminal devices in the same group. For example, the first common information may include two parts, i.e., cell-level shared information and message basic attribute information. The cell-level shared information includes at least cell identity information (e.g., cell ID or source network device ID), and the message basic attribute may include information such as a message type, a handover reason, and a common timing advance (timing advance, TA) configuration.

As an example, information elements (information element, IE) of the first common information may be referenced in Table 2 below.

In some embodiments, the second common information may include optional shared information among terminal devices within the same group, i.e., information that the terminal devices may share beyond cell information and message basic attribute information. The specific content of the common information may vary based on actual conditions, and different terminal devices may share different information under different conditions.

As an example, the information elements in the second common information may be referenced in Table 3 below.

The first message group may further include exclusive information of all terminal devices in the first terminal device group. Exclusive information refers to user-level information unique to each terminal device, also known as specific information. This exclusive information may be used by the target network device to determine a handover request of each terminal device. For example, the target network device may combine the first common information, second common information, and exclusive information to determine corresponding cell handover request information for each terminal device.

In some embodiments, exclusive information refers to a terminal device identity and information that cannot be shared among terminal devices, such as security information and a user session list. The terminal device identity may be, for example, a cell radio network temporary identifier (cell radio network temporary identifier, C-RNTI). The user session list may be, for example, protocol data unit (protocol data unit, PDU) session related information (PDU session related information). The security information may be, for example, security key information (key gNB, KgNB for short) from the source base station side. The exclusive information may also be, for example, a mapping rule for a quality of service (quality of service, QoS) flow to a data radio bearer (data radio bearer, DRB).

In some embodiments, for user-level information that cannot be shared among terminal devices, an existing data structure may be used to minimize the impact on relevant technical standards as much as possible. However, the IEs already included in all common information (including cell-level first common information and user-level second common information) in each user-level information field should be nullified in this data structure.

As previously mentioned, the source network device may send all the request information about upcoming handovers to the target network device via the first message group to the target network device for handover preparation. The first message group is used to carry necessary information for executing the handover of terminal devices between the source network device and the target network device. Therefore, the first message group primarily includes three parts, i.e., group ID, common information (which includes both first common information and second common information), and exclusive information of each terminal device.

FIG. 7 provides an example of the information content included in the first message group. Based on the information content in FIG. 7, the generation process of the first message group is exemplified. Before the first message group is generated, the two grouping operations mentioned above need to be performed.

First, all terminal devices that execute the handover to the same target network device at the same time (or adjacent times) are grouped into a set. All terminal devices within this set share cell-level common information and an information field indicating the message attribute, which corresponds to the basic common HO request IEs (basic common HO request IEs, first common information) field in FIG. 7. The cell-level common information corresponds to the common cell config (common cell config) field, which includes the source cell ID and other cell information. The information field indicating the message attribute corresponds to the common HO request message IEs (common HO request message IEs) field.

Next, the terminal devices are further grouped within the set, and terminal devices having the same user-level information (fields that are neither cell information nor message attribute information) are categorized into the same group. The user-level common information obtained from the regrouping should be filled into the optional common HO request IEs (optional common HO request IEs, second common information) field shown in FIG. 7. The group ID is used to indicate the grouping information of users in the regrouping process.

Finally, the first message group should further carry the exclusive information of the terminal devices, which corresponds to the special HO request IEs (special HO request IEs) field shown in FIG. 7. It should be noted that the exclusive information of terminal devices should include at least IDs of the terminal devices, enabling the target network device to determine groups to which each terminal device belongs based on the user ID, source cell ID, and group ID. The terminal device IDs may be represented as User 1, User 2, etc., in FIG. 7.

It is seen from FIG. 7 that information categories within the first message group include the group ID, first common information, second common information, and exclusive information of the terminal device (specific user-level information). Due to the message size limit, the first message group may include one or more sub-messages. The size and content of each sub-message may be designed according to requirements.

In some embodiments, a size of each sub-message does not exceed a preset message size to meet transmission requirements. Exemplarily, based on factors such as network device performance, message rate, and expected processing delay, the number of terminal devices' information carried in each sub-message may be determined. For example, each sub-message carries M terminal devices, where M is a natural number greater than or equal to 1. The value of M depends on the specific size limitations of the message.

In some embodiments, the first message group includes at least one sub-message. Each sub-message includes first identity information corresponding to the first terminal device group and second identity information corresponding to the source cell, allowing the target network device to determine all sub-messages corresponding to the first terminal device group. For example, each sub-message includes at least the group ID and its source network device ID. For another example, each sub-message includes at least the group ID and the source cell ID.

For ease of distinction, an initial sub-message, which is preferentially sent in the first message group, may be referred to as a first sub-message, and any subsequent sub-message sent after the initial sub-message may be referred to as a second sub-message.

In some embodiments, the first sub-message may carry the information shared among the terminal devices in the group, enabling the target network device to generate complete user handover preparation information by combining the previously received common information upon receiving the exclusive information of the terminal devices. The shared information includes two parts, i.e., the first common information (cell-level basic common information) and the second common information (user-level optional common information). That is, the first sub-message includes the first common information and the second common information.

In some embodiments, since the first sub-message carries common information, the second sub-message does not need to carry the common information again. For example, the second sub-message may only need to carry the exclusive information of the terminal devices, along with the group ID and cell ID. The target cell may index the common information of the same group of terminal devices in the first sub-message in the same set based on the group ID and source cell ID included in the second sub-message. For example, the second sub-message may further carry a message attribute related to the first common information.

In some embodiments, the first message group may have different specific formats under different circumstances. These different formats may vary in aspects such as the order of fields within the same sub-message, the order of different sub-messages within the same group, or the information included in the sub-messages.

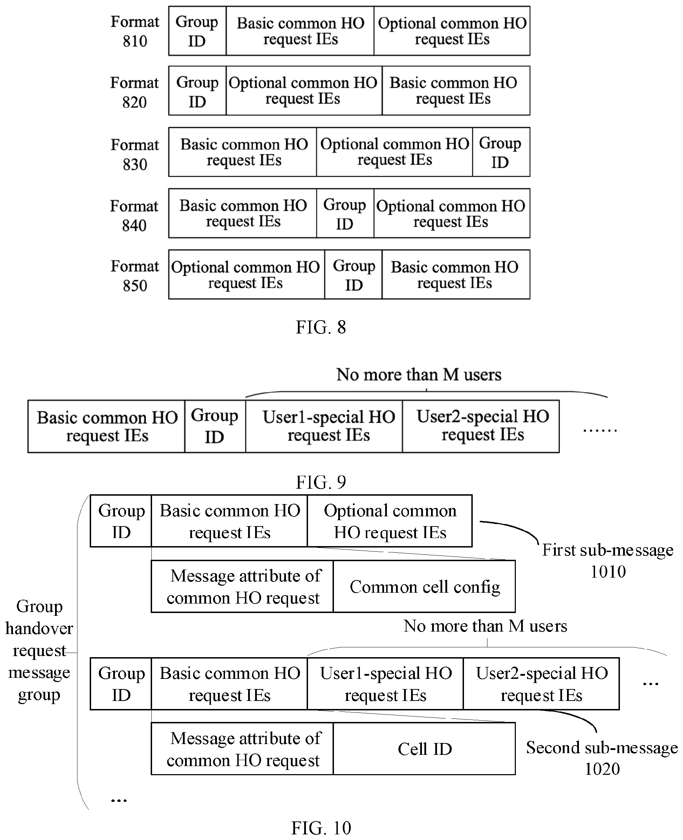

As an example, the order of fields within the same sub-message may vary. To enhance the generality of the scheme, no limitations are placed on the order among the group ID, first common information, second common information, and exclusive information. For example, there are no limitations on the order among the group ID, basic common information, and optional common information within the first sub-message. The first sub-message carrying the common information may appear in five different formats as shown in FIG. 8.

Refer to FIG. 8, in format 810, the group ID generated by regrouping is placed at the header of the sub-message, followed by the basic common handover request information and optional common handover request information among terminal devices within the same set.

Continuing to refer to FIG. 8, the first sub-message carrying common information may alternatively be designed in format 820. Compared to format 810, positions of the cell-level common information and user-level common information in common information sections are interchanged in format 820.

As shown in FIG. 8, the first sub-message may alternatively be designed in formats 830 to 850. In formats 830 to 850, the order of the group ID, cell-level common information, and user-level common information included in the first sub-message varies.

In addition to possible differences in the field order within the first sub-message, there are no limitations on the field order of remaining sub-messages within the message group. For example, for a second sub-message, the group ID may be located at the header of the sub-message or, as shown in FIG. 9, in the middle of the sub-message. Referring to FIG. 9, the basic common information carried by the second sub-message is located at the header, followed by the group ID, and then followed by the exclusive information of a plurality of terminal devices.

In some embodiments, the exclusive information of terminal devices and common information may be sent in different sub-messages. For example, in a case where the message size limit is relatively strict or there is a large amount of common information, shared information and exclusive information of terminal devices may be sent separately. The first sub-message, which is preferentially sent, carries the complete two parts, i.e., basic common information and optional common information, and the second sub-message carries one or more special user-level information (exclusive information) of terminal devices. For example, the second sub-message may carry exclusive information of no more than M terminal devices. An exemplary explanation is provided with reference to FIG. 10.

The group handover request message group shown in FIG. 10 includes a first sub-message 1010 and a plurality of second sub-messages 1020. As shown in FIG. 10, due to the large amount of common information and strict message size limit, the first sub-message 1010 only carries a group ID, basic common information and optional common information among terminal devices. The basic common information further includes common handover request message attributes and common cell configuration information. The common cell configuration information includes a cell ID. The second sub-message 1020 carries the group ID, basic common information that includes only message attributes and the cell ID, as well as exclusive information of M terminal devices (UE1 to UEM).

It is seen from FIG. 10 that the cell-level information part in the basic common information has already been provided in the first sub-message, so the second sub-message does not need to carry it again and only needs to include information indicating message attributes. Additionally, the second sub-message carrying exclusive information of terminal devices further needs to carry the corresponding group ID and source cell ID, enabling the target network device to index the common information of the same group of terminal devices within the same set in the first sub-message based on the group ID and source cell ID.

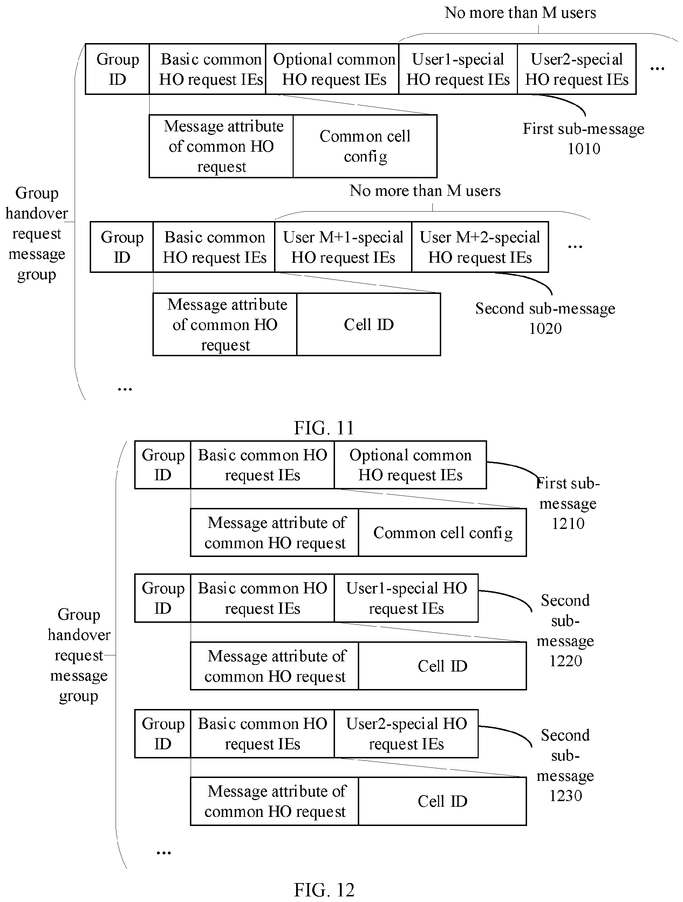

In some embodiments, shared information and exclusive information of terminal devices may be sent in a merged manner. Exemplarily, in a case where the message size limit is relatively loose or there is less common information, the exclusive information of terminal devices may be sent together with common information in the same sub-message. For example, the first sub-message may further carry exclusive information of no more than M terminal devices in addition to carrying basic common information and optional common information. The second sub-message carries exclusive information of other terminal devices. An exemplary explanation is provided with reference to FIG. 11.

The group handover request message group shown in FIG. 11 includes a first sub-message 1110 and a plurality of second sub-messages 1120. Compared to FIG. 10, due to less common information or a relatively loose message size limit, the first sub-message 1110 further carries exclusive information of M terminal devices (UE1 to UEM). The second sub-message 1020 carries exclusive information of other M terminal devices (UEM+1 to UEM+M).

In some embodiments, shared information and exclusive information of each terminal device are not merged and are sent separately. For example, in a case where the message size limit is extremely strict or where minimal impact on technical standards is desired, merging is not performed between messages, and the first sub-message carries the complete common information part, while the remaining sub-messages only carry exclusive information of one terminal device. In this case, a structure of the second sub-message may fully adopt a message structure and fields of a terrestrial handover request, but the information already carried in the common message part needs to be nullified. An exemplary explanation is provided with reference to FIG. 12.

The group handover request message group shown in FIG. 12 includes a first sub-message 1210 and a plurality of second sub-messages 1220, 1230, etc. Compared to FIG. 10, the information carried by the first sub-message 1210 is the same as that carried by the first sub-message 1010. However, the second sub-message carries only exclusive information of a single terminal device. For example, the second sub-message 1220 carries only exclusive information of terminal device UE1, and the second sub-message 1230 carries only exclusive information of terminal device UE2, and so on.

Optionally, regardless of which sending method is used for the first message group, there are no limitations on the field order within each sub-message. However, it is required to ensure that the group ID and common information are transmitted or received before the exclusive information, so that the target network device may generate complete handover preparation information for the terminal devices by combining the received exclusive information with the previously received common information. In other words, there are no limitations on the order of fields such as group ID, first common information, second common information, and exclusive information in the first and second sub-messages.

The message structure of the first message group has been described above with reference to FIG. 7 to FIG. 12. The first message group includes common information that may be shared among terminal devices within the group, where the common information is generated based on two grouping operations. During sending, the common information is preferentially sent, followed by user-level information that cannot be shared among terminal devices. Through this message structure, information required for handover requests/acknowledgements of the plurality of terminal devices is integrated within a reconstructed handover request/acknowledgement message group. Since common information fields are shared by the plurality of terminal devices, information that is originally required to be sent multiple times only needs to be sent once, resulting in lower signaling overhead for the first message group compared to the existing handover preparation process of one signaling for one user.

Continuing to refer to FIG. 6, after the source network device sends the first message group at operation S620, the target network device may obtain the handover preparation information for all terminal devices based on the received first message group. After the target source network device receives the handover preparation information, it may perform admission control for the terminal devices on the network side, thereby determining the handover request acknowledgement.

In some embodiments, the target network device obtains information for individual terminal devices based on the common information in the first sub-message as follows. When the target network device receives the first sub-message in each message group, it needs to store the basic common information and optional common information carried in the first sub-message, along with their corresponding source cell ID and group ID. When a subsequent second sub-message arrives, the target network device may index the common parameter configuration of the terminal devices in the message through the source cell ID (to identify a source cell to which the terminal device belongs and index the cell-level common information) and the group ID (to identify a group to which the terminal device belongs in the regrouping and index the user-level common information), thereby obtaining the complete handover preparation information for all terminal devices.

In some embodiments, due to changes in the format of the handover request message, the target network device does not need to perform admission control for each terminal device individually according to the information of each terminal device when performing the admission control. For example, since the first sub-message in the first message group carries the common information for terminal devices in the same group, the target network device may first process the shared information among terminal devices and then process the exclusive information of each terminal device, to perform hierarchical admission control determinations. In other words, since the handover request and acknowledgement message is generated according to the structure of common information-user-level information, the target network device may also perform grouped admission control determinations when executing the admission control process based on user information. The target network device may first perform preliminary admission control for all terminal devices within the same group based on the common information, then perform user-level admission control based on non-shareable information for each terminal device, and finally complete the admission control for all terminal devices and generate a group handover request acknowledgement to send back the group handover request acknowledgement to the source network device.

As an embodiment, the target network device may execute admission control according to the following process. First, the target network device may perform a first part of admission control determination for all terminal devices in the same cell within the sub-message based on the basic common information in the group handover request. Second, the target network device may perform a second part of admission control determination for all terminal devices in the same group based on the optional common information in the group handover request. Third, the target network device may perform a third part of admission control determination based on the user-level information of each terminal device carried in the group handover request. Finally, the target network device may merge results of the three parts into a group handover request acknowledgement message based on the same group classification.

In some embodiments, after receiving the first message group sent by the source network device, the target network device parses out the handover preparation information for all terminal devices and performs admission control to obtain the handover request acknowledgement information for all terminal devices. To further reduce the delay during the handover request phase, the target network device is not required to perform regrouping, and still uses the terminal device grouping that was adopted by the source network device to send the information to the target network device during information merging.

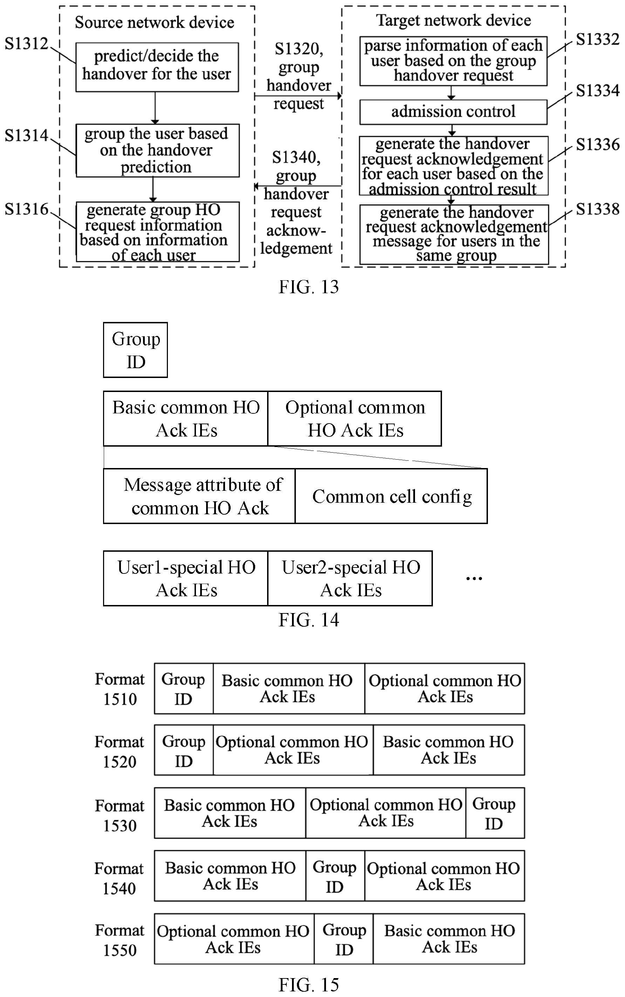

For ease of understanding, the following provides an exemplary explanation of the handover preparation phase in the embodiments of the present application with reference to FIG. 13, focusing on the interaction between the source network device and the target network device regarding group handover requests and group request acknowledgements.

Referring to FIG. 13, the source network device generates the group handover requests by executing operations S1312 to S1316. The target network device generates the group handover request acknowledgements by executing operations S1332 to S1338.

At operation S1312, the source network device predicts/decides a handover for a user. This prediction may include a handover target of the user and a corresponding handover time.

At operation S1314, the source network device groups users based on the handover prediction. Users that (are likely to) execute the handover to the same target network device at the same (adjacent) time are grouped into a set based on a handover prediction result, and some users with the same handover preparation information in the set are grouped together.

At operation S1316, the source network device generates a group handover request information based on information of the users. The source network device merges the information of the users within the group to generate the group handover request information, which is the first message group mentioned above.

At operation S1320, the source network device sends a merged group handover request to the target network device.

At operation S1332, after receiving the first message group sent by the source network device, the target network device parses the information of the users based on the group handover request.

At operation S1334, the target network device performs hierarchical admission control for the users. Hierarchical admission control means that the admission determination is first made based on the common information part of the handover request, and then made based on special information of the users.

At operation S1336, the target network device generates handover request acknowledgements for the users based on the admission control results for the users.

At operation S1338, the target network device generates handover request acknowledgement messages for users in the same group. The target network device may generate the second message group as the group handover request acknowledgement based on the same grouping criteria.

At operation S1340, the target network device sends the group handover request acknowledgements back to the source network device. The source network device may parse the handover request acknowledgements for the users based on the second message group.

As shown in FIG. 13, the embodiments of the present application enhance the existing operations of the handover preparation phase for the single user, supporting grouped/batched user handover requests and acknowledgements. Users within the same group share part of the common information, which may reduce the signaling overhead generated during user handover preparation performed between the source network device and the target network device in the handover preparation phase, and decrease the frequency of signaling interactions by merging the requests/acknowledgements of the plurality of users.

As mentioned above, the group handover request acknowledgement sent by the target network device to the source network device is also referred to as the second message group. To reduce latency, the target network device uses the same grouping method as the first message group when generating the second message group. In some cases, the target network device may also regroup all terminal devices in the first terminal device set.

The second message group may be used by the target network device to indicate the handover request acknowledgements for all terminal devices in the first terminal device group, which is also referred to as a GroupHandoverRequestAcknowledge message group (GroupHandoverRequestAcknowledge message group, or GroupHOAck message group for short). In some embodiments, the target network device may determine the request acknowledgements based on the handover requests from each terminal device and then merge the request acknowledgements to generate the corresponding second message group for the first terminal device group.

In some embodiments, the second message group may include the information required for all the terminal devices in the first terminal device group that are about to execute the handover to the target network device, facilitating the handover preparation by the source network device.

In some embodiments, the second message group is determined based on the admission control determination of the target network device. For example, the first common information is used by the target network device to perform a first admission control determination, the second common information is used by the target network device to perform a second admission control determination, and the exclusive information of each terminal device in the first message group is used by the target network device to perform a third admission control determination. The target network device may determine whether each terminal device in the first terminal device group initiates the cell handover based on the results of the three admission control determinations, thereby generating the second message group.

As an embodiment, a result of the first admission control determination may serve as a preliminary admission control determination result for all terminal device groups in the first terminal device set, thereby improving the efficiency of admission control. For example, the result of the first admission control determination may be temporarily retained, so that there is no need to perform the first admission control determination again when another terminal device group in the first terminal device set makes handover requests.

As an embodiment, a result of the second admission control determination may be used for all terminal devices within the first terminal device group.

Similar to the first message group, the second message group includes a plurality of sub-messages. For example, a size of each sub-message does not exceed a preset message size, and each sub-message includes at least a group ID and its source base station ID. For example, only the first sub-message of each group needs to carry two parts, i.e., the basic common information and the optional common information. When the target network device sends the second message group, it is required to preferentially send each sub-message that carries the basic common information and optional common information, and then send the remaining sub-messages to the source network device later.

The following provides an exemplary explanation of the information content in the second message group with reference to FIG. 14. Compared to FIG. 7, the acknowledgement information content of the second message group is similar to the request information content of the first message group. For simplicity, the previously explained information is not repeated.

The second message group may carry necessary information configured by the target network for the terminal device to execute the handover between the source network device and the target network device. As shown in FIG. 14, the second message group also includes three parts: a group ID, common information (which includes both basic common information and optional common information), and exclusive information of each terminal device.

After the target network device parses and acknowledges the handover request message group for the same group of terminal devices, the second message group is generated according to the original grouping of the terminal devices. Similarly, in this message group, the common acknowledgement information includes two parts, i.e., basic common information and optional common information. The basic common information includes cell-level common information of the target cell and acknowledgement message attribute information, and the optional common information includes user-level information that is the same among users.

The basic common information corresponds to the basic common HO Ack IEs (basic common HO Ack IEs) field in FIG. 14, the user-level common information corresponds to the optional common HO Ack IEs (optional common HO Ack IEs) field in FIG. 14, and the group ID is used to indicate grouping information of the terminal devices.

In addition to the common information, the second message group should further carry user-level information that cannot be shared among terminal devices, i.e., the special HO Ack IEs (special HO Ack IEs) fields for the plurality of terminal devices as shown in FIG. 14. The exclusive information may be information such as security information pre-allocated by the target network device for the terminal devices, the success of user session transfers, etc. To minimize the impact on existing standards, for this part of the information, the existing data structure may be utilized, but IEs already included in all common information in each user-level information field should be nullified. It should be noted that the user-level information should include at least the an ID of each terminal device.

Similar to the first message group, the second message group may also have different specific formats. The differences in formats may include variations in the order of fields within the same sub-message, the order of different sub-messages within the same group message and the information included therein, etc.

For example, the second message group does not limit the order of the group ID, basic common information, optional common information, or exclusive information. With reference to FIG. 15, the following provides an explanation of five possible formats for sub-messages, taking the first sub-message carrying the common information part as an example. It should be noted that the order of fields in other sub-messages within the second message group is also not limited.

Referring to FIG. 15, in format 1510, the group ID generated by the regrouping is placed at the header of the sub-message, followed by the common cell-level information (basic common handover acknowledgment information) and the common user-level information (optional common handover acknowledgment information) among terminal devices within the same set.

Continuing to refer to FIG. 15, the first sub-message carrying common information may also be designed according to format 1520. Compared to format 1510, the positions of the cell-level common information and user-level common information in the common information part are interchanged in format 1520.

As shown in FIG. 15, the first sub-message may also be designed according to formats 1530 to 1550. In formats 1530 to 1550, the order of the group ID, cell-level common information, and user-level common information included in the first sub-message varies.

In addition, similar to the first message group, there are no limitations on the specific content included in each sub-message of the second message group, as long as the second message group carries complete message content (including group ID, basic common information field, optional common information field, and user-special user-level information).

It should be noted that the orders in which sub-messages in the first message group (handover request message group) and the second message group (handover request acknowledgment message group) arrive at the source/target network devices may differ. Regardless of the order in which sub-messages arrive, it is sufficient for the common information part to arrive before the user-level information part. However, in some cases (such as retransmissions after sending failures), the common message part may not arrive at the target/source network device before the user-level information. In such cases, the source/target network device needs to store the first arriving sub-message without processing it and start a timer. If the sub-message carrying the common information arrives before the timer expires, the processing is performed based on the later arriving sub-message carrying the common information part. If the sub-message carrying the common information does not arrive before the timer expires, the user-level information should be discarded, and a message should be returned to indicate this exception.

Based on the above introduction to the first message group and the second message group, it is seen that the embodiments of the present application improve the handover preparation phase in the relevant handover process, proposing a handover preparation scheme suitable for grouped handovers in satellite NTN networks and its corresponding message format. In embodiments of the present application, through the adjustment of the grouping process and message format, the handover signaling for each terminal device is restructured and merged into the same message group, thereby reducing the frequency of signaling interactions while also lowering signaling overhead. Furthermore, when the target network device performs admission control based on user information, it may first conduct partial admission control for all terminal devices in the group starting from the common information, and then complete the full admission control in combination with the user-level information of all terminal devices, thereby improving the efficiency of admission control to some extent.

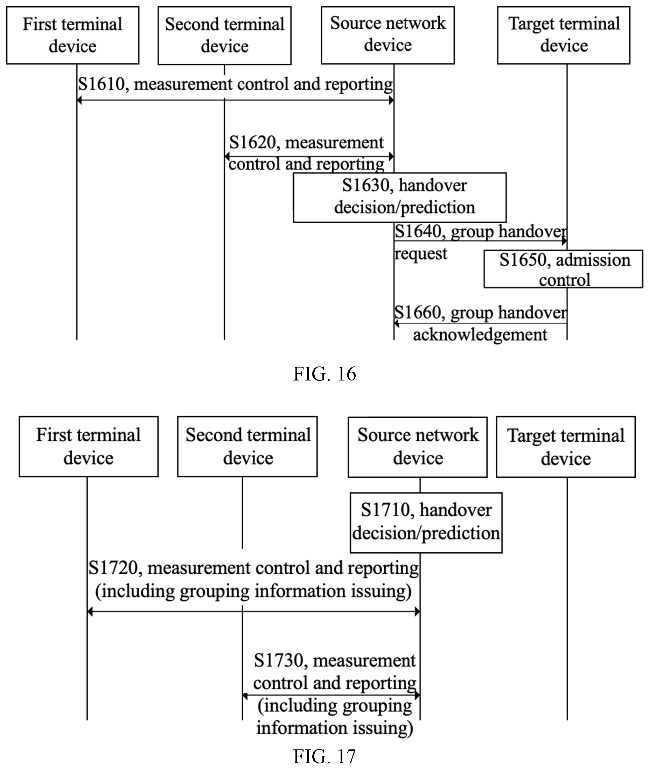

The above description provides a detailed introduction to the handover preparation phase based on grouping and signaling restructuring through operations S610 and S620 in FIG. 6. For ease of understanding, the following introduces one possible implementation of this method in combination with the schematic flowchart shown in FIG. 16. FIG. 16 is illustrated from the perspective of interactions among a first terminal device, a second terminal device, the source network device, and the target network device, where both the first terminal device and the second terminal device may belong to the first terminal device group.

Referring to FIG. 16, at operation S1610, the first terminal device performs measurement control and reporting with the source network device.

At operation S1620, the second terminal device performs measurement control and reporting with the source network device. There is no timing constraint between operations S1620 and S1610.

At operation S1630, the source network device makes a handover decision/prediction. The prediction result is used to group the terminal devices and generate group handover requests for each group based on the grouping.

At operation S1640, the source network device sends the group handover requests, i.e., the first message group, to the target network device.

At operation S1650, the target network device performs admission control. A result of the admission control is used to determine handover acknowledgments.

At operation S1660, the target network device sends the group handover acknowledgments, i.e., the second message group, back to the source network device.

The main purpose of grouping terminal devices is to facilitate grouped cell handovers, which may reduce the substantial signaling overhead caused by individual handover preparation of each terminal device made when the handover is about to occur. Based on the grouping, the source network device may execute grouped handover indications when initiating handovers to terminal devices, thereby reducing the signaling overhead that would result from issuing individual handover indications to all terminal devices. Therefore, it may be required to inform the terminal devices of this grouping information during the handover preparation phase.

Continuing to refer to FIG. 6, at operation S630, the source network device sends grouping information to the terminal devices. This grouping information is used by the terminal devices to determine first terminal device groups to which they belong. As previously mentioned, the first terminal device group is any terminal device group in the first terminal device set that executes the cell handover.

The grouping information may include result information of the grouping and may also include various information used for grouping. For example, the grouping information may include first grouping information that directly indicates the first terminal device groups to which the terminal devices belong. The terminal devices may directly determine their group based on the first grouping information. For another example, the grouping information may include second grouping information used for the terminal devices to calculate or determine the terminal device groups to which they belong. For example, the second grouping information may include a plurality of reference points and a distance threshold, and the terminal device may determine its group based on its location.

Grouping information may be sent to each terminal device in the first terminal device set in various ways. For example, the first grouping information may be carried in existing signaling during the handover preparation phase without the need for additional signaling. For another example, the first grouping information may be sent via separate signaling to accommodate network devices with different handover prediction capabilities. For another example, the second grouping information may be broadcast to a plurality of terminal devices within a cell to facilitate completion of the grouping of the terminal devices.

For ease of understanding, the following provides exemplary explanations of the methods for issuing grouping information with reference to FIG. 17 to FIG. 20.

In some embodiments, the source network device may send the first grouping information through signaling related to the measurement reports when predicting and determining the first grouping information before receiving the measurement reports from the terminal devices. For example, when the source network device is capable of making advanced handover predictions on the terminal devices or may group based on handover prediction results of the terminal device, the source network device may issue grouping results along with measurement control signaling when the network device performs measurement control on the terminal devices.

FIG. 17 is a schematic flowchart of issuing grouping information during the measurement control phase. Referring to FIG. 17, at operation S1710, the source network device makes handover decision/prediction, and the prediction occurs before measurement control and reporting with the terminal devices.

At operations S1720 and S1730, the source network device conducts measurement control and reporting with the first terminal device and the second terminal device separately. As shown in FIG. 17, the grouping information is issued along with the measurement control signaling to the two terminal devices.

The grouping information issuing scheme shown in FIG. 17 slightly increases a signaling size but does not require additional signaling. Since the grouping is completed earlier, in a terrestrial moving cell scenario, a measurement report reported by any terminal device within the same set may represent the measurement values for all users in that group. For example, the source network device may instruct any terminal device in the first terminal device group to send a first measurement report according to first grouping information. The first measurement report is used to indicate measurement values for all terminal devices in the first terminal device group.

In some embodiments, if the network device cannot complete the handover prediction as shown in FIG. 17 at an earlier time, it may consider introducing a new handover grouping signaling to convey the grouping information to users. This signaling transmission occurs between operations S220 and S270 shown in FIG. 2. For example, the source network device may send the first grouping information via separate signaling before sending the first message group to the target network device.

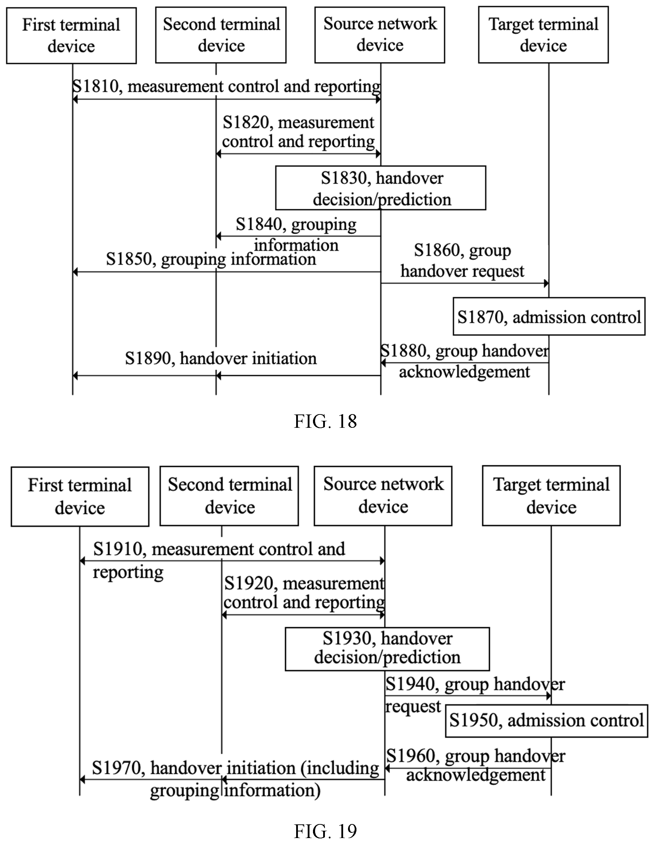

FIG. 18 is a schematic flowchart of issuing grouping information through newly added separate signaling. Referring to FIG. 18, operations S1810 to S1830 are consistent with operations S1610 to S1630 in FIG. 16, and operations S1860 to S1880 are consistent with operations S1640 to S1660 in FIG. 16, which are not repeated herein.

At operations S1840 and S1850, the source network device issues grouping information to the first terminal device and the second terminal device, separately. The first terminal device and the second terminal device may belong to the same terminal device group.

At operation S1860, the source network device sends handover initiation signaling to the two terminal devices separately.

The grouping information issuing scheme shown in FIG. 18 requires additional signaling, which may result in relatively poorer performance. However, it can be applied to network sides with different user handover prediction capabilities. In other words, grouping information is able to be issued in this way, regardless of when the network side completes the handover prediction for the terminal devices during the handover preparation phase.

In some embodiments, since user-level information for terminal devices should be sent via unicast, to avoid adding additional message types, the grouping information may be sent along with handover initiation messages sent by the source network device to the terminal devices. User-level information, for example, may be non-shareable information carried in RRC. Exemplarily, the source network device may send the first grouping information based on the received handover request acknowledgments. For example, the first grouping information may be sent through the handover initiation messages corresponding to the terminal devices.

FIG. 19 is a schematic flowchart of issuing grouping information during the handover initiation phase. Referring to FIG. 19, since operations S1910 to S1960 are consistent with operations S1610 to S1660 in FIG. 16, they are not repeated herein.

At operation S1970, the source network device sends handover initiation signaling to the two terminal devices separately, and the handover initiation signaling includes issued grouping information.

In the grouping information issuing scheme shown in FIG. 19, the grouping information is sent to the terminal devices along with exclusive information of the terminal devices, slightly increasing the signaling size without requiring additional signaling. However, an occasion for issuing the grouping information is later, which limits improvement of processes based on grouping signaling.

In some embodiments, when performing first grouping, the source network device groups terminal devices that execute the handover to the same target cell at the same or similar time into the same set. The source network device may broadcast a grouping standard to the terminal devices within the set for self-grouping of the terminal devices. For example, in the terrestrial moving cell scenario, terminal devices that are geographically close typically execute the handover to the same target cell at the same or similar time. Therefore, the network device may broadcast a plurality of reference points and a distance threshold, and the terminal devices complete the grouping based on their positions and report the grouping information to the network side along with their measurement reports.

Exemplarily, the source network device may send second grouping information via broadcasting. The second grouping information is used for terminal devices in the first terminal device set to determine first terminal device groups to which they belong. The terminal devices may report their determined grouping situations to the source network device.

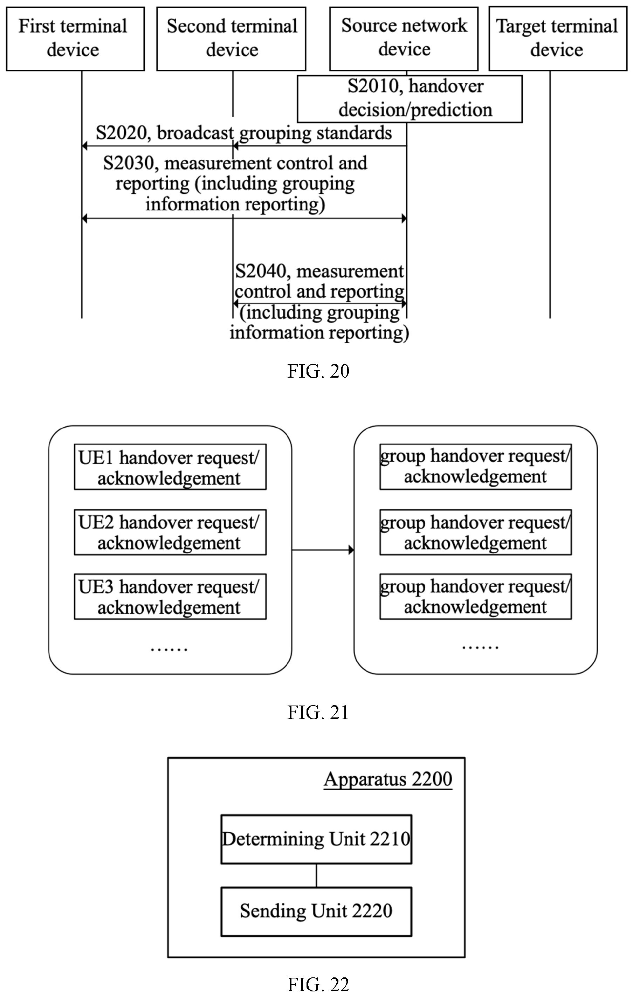

FIG. 20 is a schematic flowchart of terminal devices grouping and reporting based on a grouping standard broadcast by the network side. Referring to FIG. 20, the handover decision/prediction at operation S2010 is consistent with operation S1710 in FIG. 17 and is not repeated herein.

At operation S2020, the source network device sends a grouping standard via broadcasting.

At operations S2030 and S2040, the source network device conducts measurement control and reporting with the first terminal device and the second terminal device separately. As shown in FIG. 20, the grouping information is sent along with measurement reports to the source network device.

In the grouping information issuing scheme shown in FIG. 20, the network side needs to broadcast a plurality of reference points and a distance threshold. Terminal devices calculate their nearest reference points based on their positions to complete grouping. This scheme increases overhead of broadcast signaling. When the terminal devices report the grouping information along with their measurement reports to the network side, a size of uplink measurement report signaling is also slightly increased. An occasion for completing the grouping is similar to that in the scheme shown in FIG. 17, but there is no need to report their own location information.

The above description, with reference to FIG. 6 to FIG. 20, provides a detailed introduction to the technical solutions for handover signaling interaction and grouping information issuing based on two grouping operations of terminal devices by using the handover preparation phase as an example. This technical solution flexibly merges a handover request and acknowledgment information of a single terminal device, allowing information required for handover of a plurality of terminal devices to be carried in a single message, eliminating the need for repeated sending of the same information, and ultimately reducing signaling interaction frequency and signaling overhead. The grouped admission control determination processes performed by the target network device also improve the efficiency of admission control to some extent.

For ease of understanding, the following introduces scenarios to which an NTN system is applied for cell handover preparation in combination with a plurality of embodiments of the present application, using satellites performing cell handover preparation for a plurality of users (e.g., UEs) within a cell as an example.

### Embodiment 1

In the terrestrial fixed cell scenario shown in FIG. 2, users within a fixed cell may be represented as UEᵢ, where i is a natural number greater than or equal to 1. Before the satellite 210 ends a service, a source network device may determine a next target satellite SATⱼ to which the UEᵢ executes the handover, where j = 1, 2, ..., Pᵢ, and Pᵢ represents the number of target satellites to which the UEᵢ may execute the handover next time based on prediction/decision of a network device. The network device may not have finalized a target satellite for the user but has determined a plurality of possible target satellites.

Due to a coverage area of a satellite cell being significantly larger than that of a terrestrial cell, the number of users within a single satellite cell may be much greater than the number of users in a single terrestrial cell. Assuming the number of users in a current cell is N, and a serving satellite is SAT_{A}, handover prediction/decision results for all users may be as shown in Table 1.

**Table 1**

| User | Target Satellite 1 | (Candidate) Target Satellite 2 | (Candidate) Target Satellite 3 | (Candidate) Target Satellite 4 |
|---|---|---|---|---|
| UE₁ | SAT_{B} | SAT_{C} | SAT_{D} | SAT_{E} |
| UE₂ | SAT_{B} | SAT_{C} | SAT_{D} | SAT_{E} |
| ...... | ...... | ...... | ...... | ...... |
| UEᵢ | SAT_{B} | SAT_{C} | SAT_{D} | SAT_{E} |
| ...... | ...... | ...... | ...... | ...... |
| UE_{N} | SAT_{B} | SAT_{C} | SAT_{D} | SAT_{E} |

Table 1 presents the handover prediction/decision results for N users served by Satellite A. In the terrestrial fixed cell scenario, all users within the same cell typically execute the handover to the same target satellite, so different users in the handover prediction/decision usually are served by the same (candidate) target satellite, and all users will execute the handover to the target satellite within the same time window.

Based on factors such as network device performance, message rate, and expected processing delay, it is determined that the number of user information carried in a single group handover request message does not exceed M. The operation for generating handover request message groups for M users may be mainly divided into three operations: initial user grouping, user regrouping, and generating a request message based on the grouping results. The specific process is described as follows.

### 1. Initial User Grouping

The purpose of initial user grouping is to select all users that execute the handover to the same target satellite at the same or adjacent time through screening, so as to facilitate grouped handover requests. In the terrestrial fixed cell, user handovers caused by satellite mobility have a unified target satellite and consistent handover window occasion, so most users are grouped into the same set during initial grouping. However, there are still users located at the edge who may have different target satellites, which may be grouped based on distances of the users from a cell center. All users not at the cell edge are grouped into the same set, while users at the cell edge who may be handed over to another cell due to mobility may be grouped based on a potential target cell.

To distinguish from the subsequent regrouping operation, a result from the initial grouping is defined as a user set {UEᵢ}ₓ, where x is the target satellite for handover. The set {UEᵢ}ₓ refers to all users executing the handover to a target satellite x. In the initial user grouping, since there may be more than one target satellite, users may belong to a plurality of user sets simultaneously. For example, UE₁ may exist in a message group sent from source satellite SAT_{A} to target satellite SAT_{B}, as well as exist in a message group sent from source satellite SAT_{A} to target satellite SAT_{C}.

### 2. User Regrouping

The purpose of user regrouping is to classify users with the same parameter configurations or what is regarded as the same parameter configurations into the same group, so that all users within the group may share these same parameter configurations. For example, users with adjacent locations may share the same set of geographical location parameters, users with similar QoS may have the same RMM measurement configurations, etc.

Unlike initial grouping, regrouping requires addition of a group ID, where each group of users corresponds to a unique group ID (group ID) to indicate a grouping attribute of a message in the regrouping process.

### 3. Generating Request Messages Based on Grouping Results

In the initial grouping, the set {UEᵢ}ₓ has a unified source/target cell, so these users may share cell-level information related to the same group of source/target cells and some other common information used to indicate attributes of the message itself, which is referred to as basic common information. A possible list of basic common information is shown in Table 2.

**Table 2**

| IE | Description | Attribute |
|---|---|---|
| Message Type | Used to indicate the function of the message, etc. | Information indicating message attributes |
| Handover reason | Indicate the reason for the mobility handover | Information indicating message attributes |
| Handover Type | Indicate the type of handover | Information indicating message attributes |
| Target Cell ID | Identity of the target cell for handover | Cell-level information |
| Source Cell ID | Identity of the source cell for handover | Cell-level information |
| Common TA Configuration | Common timing information from the source cell | Cell-level information |
| Source Cell Service Threshold | Parameters related to the minimum signal strength required by users in the source cell | Cell-level information |
| Function Support Indication | Used to indicate whether some optional radio functions are supported in the source cell | Cell-level configuration |

In the regrouping process, users with the same GID share some user-level information, which is referred to as optional common information. Depending on different grouping criteria, a possible list of optional common information is shown in Table 3.

**Table 3**

| IE | Description | Grouping Criteria |
|---|---|---|
| RRM Measurement Report | Used to indicate the user's cell measurement results, such as RSRP, RSSI, etc. | Users with adjacent geographical locations and similar RF characteristics share some configurations in this parameter |
| User RAT Access Capability | Used to indicate the user's capability to access different access network technologies | Users with the same or similar characteristics typically have similar wireless access capabilities |

In extreme cases, if no user-level information that may be shared among users can be found, the optional common information is set to null.

After the common information among users in the same group is obtained based on the above grouping results, an initial sub-message in a possible group handover request message group is generated in combination with the user-level information of all users, which is as shown as the first sub-message 1110 in FIG. 11.

In the initial sub-message of the handover request message group, a group identity, common information part, and user-special information part are sequentially arranged. The common information part includes basic common information and optional common information. The basic common information part corresponds to cell-level configuration information and part of attributes of the message itself. The user-special information corresponds to unique and non-shareable information for each user, and the pieces of information are arranged sequentially, with each field corresponding to a user. Possible user-special information is shown in Table 4.

**Table 4**

| IE | Description |
|---|---|
| C-RNTI | The identity of a user in the source cell |
| PDU Session Related Information | Information related to the PDU session, used for session handover |
| KgNB | Security key information for a user at the source base station side |
| QoS Flow To DRB Mapping Rule | The mapping rule for the quality of service flow to the data radio bearer currently applied to the UE |

It should be noted that the specific format of the messages described above is just one possible example in this implementation, and there are no limitations on the specific order of fields. However, the common information field and group ID should precede the user-special information.

To differentiate group identities for handover request and acknowledgement messages, the group identity in the handover request message is referred to as GID_REQ, and the group identity in the handover request acknowledgement message is referred to as GID_ACK.

Due to the message size limit, a single sub-message in a handover request message group may only carry a limited number of users. If the number of users within the same GID_REQ in the same user set {UEᵢ}ₓ exceeds the message size limit, it is required to send user information corresponding to the GID_REQ in a plurality of messages. In this case, it is only required to fill in the common information part in the initial message. For subsequent messages, the groups to which the messages belong may be determined using the cell ID and group identity GID_REQ, and the common information part from the initial message of the same group may be used as the common information part for the subsequent messages. In the common information part of the subsequent messages, the common cell configuration (except the cell ID) and optional common information are set to null. The format of subsequent messages within the same group is shown as the second sub-message 1120 in FIG. 11.

In this embodiment, after receiving the group handover request from the source cell, the target cell performs admission control based on the common information and user-special information included in the message. In a conventional admission control phase, the target cell needs to make hierarchical determination based on user information carried in the request, and generates different admission decision results based on each field information of the user. In the group handover requests and acknowledgements of embodiments of the present application, the target network device may first generate a common admission determination result applicable to all users in the same group based on the common information among users, and then perform user-level admission control determinations. Finally, the common admission control result and user-level result are merged to obtain an admission control result for all users, thereby improving admission control efficiency.

During admission control, the target cell needs to first perform group admission control based on the common information in the message, and then conduct specific admission control based on each user's user-level information. The possible process is as follows.
1. Perform a first part of the admission control determination for all users in the same cell in the sub-message based on the basic common information in the group handover request.
2. Perform a second part of the admission control determination for all users in the same group based on the optional common information in the group handover request.
3. Perform a third part of the admission control determination based on the user-level information of each user carried in the group handover request.
4. Merge the results of the three parts into a group handover request acknowledgement message based on the same group classification.

After the target network device obtains the admission control results for the users, unlike the handover request message generation process of the source cell, there is no need for additional regrouping during the handover request acknowledgement, thus avoiding increased delays in the handover request and acknowledgement process. This is because the results provide the handover request acknowledgement for the handover request of the same user set {UEᵢ}ₓ, where all users in the same set must have the same source cell, and it is likely that some information may be shared in the handover request acknowledgements of users in the same group. The specific content of the handover request acknowledgement is as follows.

In the initial grouping completed by the source cell, the set {UEᵢ}ₓ has a unified source/target cell, so these users may share the same set of source/target cell-related cell-level information and some other common information used to indicate the attributes of the message itself, which is referred to as basic common information. A possible list of basic common information is shown in Table 5.

**Table 5**

| IE | Description | Attribute |
|---|---|---|
| Message Type | Used to indicate the function of the message, etc. | Information indicating message attributes |
| Handover reason | Indicate the reason for the mobility handover | Information indicating message attributes |
| Handover Type | Indicate the type of handover | Information indicating message attributes |
| Target Cell ID | Identity of the target cell for handover | Cell-level information |
| Source Cell ID | Identity of the source cell for handover | Cell-level information |
| Common TA Configuration | Common timing information from the source cell | Cell-level information |
| Source Cell Service Threshold | Parameters related to the minimum signal strength required by the users in the source cell | Cell-level information |

In the regrouping process, the grouping result from the source cell is used, and users with the same GID_ACK share some user-level information, which is referred to as optional common information. A possible list of optional common information is shown in Table 6.

**Table 6**

| IE | Description | Grouping Criteria |
|---|---|---|
| RRM Measurement Configuration | Used to indicate the candidate cell information for user measurements, configuration of measurement occasion, etc. | Users with adjacent geographical locations and similar RF characteristics share some configurations in this parameter |

In extreme cases, if no user-level information that may be shared among users can be found, the optional common information may be set to null.

After the common information among users in the same group is obtained based on the above grouping results, an initial sub-message in the handover request acknowledgment message group is generated in combination with the user-level information of all users, and a structure of the initial sub-message is the same as the structure of the first sub-message 1110 in FIG. 11, with the request message replaced by the acknowledgment message.

In the handover request acknowledgment message group, GID_ACK, the common information part, and the user-special information part are sequentially arranged. The common information part includes basic common information and optional common information. The basic common information part corresponds to cell-level configuration information and some attributes of the message itself. The user-special information corresponds to unique and non-shareable information for each user, and the pieces of information are sequentially connected, with each field corresponding to user-level information of a user.

Similar to the request message group, due to the message size limit, a single sub-message in the acknowledgment message group may only carry a limited number of users. If the number of users with the same GID_ACK in the same user set {UEᵢ}ₓ is too large and exceeds the message size limit, the user information corresponding to the GID_ACK needs to be sent in a plurality of messages. In this case, it is only required to fill in the common information part in the first message. For subsequent sub-messages, the groups to which the messages belong may be determined using the cell ID and group identity GID_ACK, and the common information part from the initial message of the same group may be directly used as the common information part for the subsequent messages.

After receiving the handover request acknowledgment messages from each user, the source cell side parses out the information required to make the handover decision for each user, thus completing the process of the handover preparation phase.

### Embodiment 2

In the terrestrial moving cell scenario shown in FIG. 3, users may also be represented as UEᵢ, where i is a natural number greater than or equal to 1. Since the coverage area of the satellite cell changes as the satellite moves, users at different locations may leave the coverage area of the source cell at different times, and users may also execute the handover to different (candidate) target satellites at different times. During user grouping, it is also required to consider a handover time of each user. For the sake of simplicity in the example, it is assumed that the satellite determines that each user has only one target satellite.

A source network device may make handover prediction/decision based on information such as motion trajectories of a service satellite and other neighbor satellites, as well as users' locations. Before the satellite 310 ends its service, it determines the target satellite SATᵢ to which UEᵢ executes the handover at an occasion τ, where τ refers to a window occasion of the handover occurrence. Unlike the terrestrial fixed cell scenario, occasions of handovers for the users differ due to the mobility of the satellite, so the specific handover time for each user needs to be taken into account. It is assumed that the number of users in a current cell is N, and possible handover prediction/decision results for the users are shown in Table 7.

**Table 7**

| User | Target Satellite | Handover Occasion |
|---|---|---|
| UE₁ | SAT₃₂₀ | τ₁ |
| UE₂ | SAT₃₃₀ | τ₂ |
| ...... | ...... | ...... |
| UEᵢ | SAT₃₃₀ | τ₂ |
| ...... | ...... | ...... |
| UE_{N} | SAT₃₂₀ | τ₁ |

Table 7 presents handover prediction/decision results for N users served by satellite 310. In the terrestrial moving cell scenario, all users within the same cell typically execute the handover to different satellites at different times.

Similarly, based on factors such as the performance of the network-side device, message rate, and expected processing delay, it is determined that the number of user information carried in a single group handover request message does not exceed M. The operation for designing the group handover request message for M users is still divided into three operations: initial user grouping, user regrouping, and generating the request message based on the grouping result. The specific process is described as follows.

### 1. Initial User Grouping

The purpose of the initial user grouping is to select all users executing the handover to the same target satellite at the same or adjacent time through screening, so as to facilitate grouped handover requests. In the terrestrial moving cell scenario, user handovers caused by satellite mobility have no unified target satellite or consistent handover window occasion. However, users located in close proximity may have the same handover occasion and target cell or similar handover occasions and target cells. Therefore, users with the same or similar handover occasion and target as well as close geographical locations are grouped into the same set based on the handover prediction results of the users.

To distinguish from the subsequent regrouping operation, a result from the initial grouping is defined as user set UE_{x,τ}, where x is the target satellite for the handover and τ is handover occasions of the users in set UE_{x,τ}. Thus, set UE_{x,τ} refers to all users executing the handover to target satellite x at occasion τ.

### 2. User Regrouping

Similarly, the purpose of user regrouping is to classify users with the same parameter configurations or what is regarded as the same parameter configurations into the same group, so that all users within the group may share these same parameter configurations. For example, users with adjacent locations may share the same set of geographical location parameters and may also have same RMM measurement configurations. The possible user-level shared information in this example is shown in Table 8.

**Table 8**

| IE | Description | Grouping Criteria |
|---|---|---|
| RRM Configuration | Used to indicate the candidate cell information for user measurements, | Users with adjacent geographical locations and similar RFs share some configurations in this parameter |
| | configuration of measurement occasion, etc. | |
| User Geographical Location | Used to provide the user's geographical location parameters to the network side with characteristic coordinates | In the initial grouping of the terrestrial moving cell, users with geographically close locations are grouped into the same set. Therefore, there may be users whose geographical locations differ very little within the set, and the same location can be used to represent specific locations of all users |

In the regrouping process, each group of users corresponds to a unique group identifier GID_REQ, which indicates the grouping attributes of the message in the regrouping phase.

### 3. Generating Request Messages Based on Grouping Results

Similarly, in the initial grouping, the set UE_{x,τ} has a unified source/target cell, so these users may share cell-level information related to the same group of source/target cells and some other common information used to indicate attributes of the message itself, which is referred to as basic common information.

In the regrouping process, users with the same GID_REQ share some user-level information, referred to as optional common information. In the most extreme case, if no user-level information that may be shared among users can be found, the optional common information is set to null.

After the common information among users in the same group is obtained based on the above grouping results, a group handover request message group sent to satellites 320 and 330 is generated in combination with the user-level information of all users, as shown in FIG. 11.

Similarly, due to the message size limit, a single sub-message may only carry a limited number of users. However, in the terrestrial moving cell scenario, the initial grouping may classify users with close geographical locations into the same set. Since the number of users within the same set is relatively small, it may be difficult to find more shared information during the regrouping process in the set. Therefore, a method for merging common information with user-special information for transmission is adopted.

In the message group shown in FIG. 11, only the common information part needs to be filled in the initial message. For subsequent sub-messages, the groups to which the messages belong may be determined by the cell ID and group identity GID_REQ, and the common information part from the initial message of the same group may be used as the common information part for the subsequent messages. In the common information part of the subsequent messages, the common cell configuration (except cell ID) and optional common information are set to null.

### Embodiment 3

In the feeder link handover shown in FIG. 4, as the satellite moves out of the service range of the source gateway station and gradually enters the service range of the target gateway station, a handover of a serving base station of a user may be triggered. As shown in FIG. 4, due to satellite 410 moving out of the service range of source gateway station 430 and gradually entering the service range of target gateway station 440, all users within the satellite cell execute the handover of their serving base station from base station 420 to target base station 450.

In this scenario, the users' handover prediction results are similar to those in the terrestrial fixed cell scenario. Assuming that the message size limit is quite strict in this example, to meet a size limit of a single message, information of users within the same group of source base station 420 is sent to target base station 450 by separately sending shared information and user-level information for handover admission control. In this case, all users executing the handover to the same target base station are regrouped, and users with the same or similar user-level information are classified into the same group. The source base station initiates a handover request to the target base station for this group of users at an appropriate time.

In this handover request, a group of messages need to be sent to deliver the basic information required for the handover of each user to target base station 450. In this group of messages, the common information and the information of the group (group ID and source cell ID) to which the common information belongs need to be preferentially sent to target base station 450, as shown in the first sub-message 1110 in FIG. 10.

Subsequently, sub-messages carrying each user's special user-level information (for example, the second sub-message 1120 shown in FIG. 10) are sent to target base station 450. Due to the size limit, the number of users carried in a single message should not exceed M.

When receiving the initial sub-message, the target base station needs to store the common information and its corresponding group information. Upon subsequent sub-messages arriving, indexing is performed based on the group ID and cell ID to obtain all the information necessary for the users' handover preparation phase, and hierarchical admission control is performed.

### Embodiment 4

In some cases, there is no common information among users. In this embodiment, initial user grouping is still required to form a user set. However, due to the small number of users in the user set, no user-level information that may be shared among users within the same set can be found during the regrouping process.

In the initial grouping, the set {UEᵢ}ₓ has a unified source/target cell. The users in the set may share cell-level information related to the same set of source/target cells and some other common information used to indicate the attributes of the message itself, referred to as basic common information. The possible list of basic common information is shown in Table 5.

In this embodiment, since no user-level information that may be shared among users can be found, the optional common information is set to null. The initial sub-message in the group handover request message group is shown as the first sub-message 1010 in FIG. 10.

Subsequently, sub-messages carrying user-level information of each user are sent to the target base station. It is assumed that a size of a single message does not exceed an original RRC message size in the handover request, so each sub-message is able to carry an RRC message of one user, as shown in the second sub-message 1220 in FIG. 12.

In this embodiment, compared to conventional non-grouping schemes, only cell-level common information is able to be shared, resulting in minimal signaling overhead savings.

### Embodiment 5

In some cases, there is a significant amount of common information among users. In this embodiment, initial user grouping is still required to form a user set. However, since the plurality of users within the user set have similar characteristics (for example, all belonging to IoT devices), there is a greater amount of information that may be shared among users.

In the initial grouping, the set {UEᵢ}ₓ has a unified source/target cell. The users in this set may share the cell-level information related to the same set of source/target cells and some other common information used to indicate the attributes of the message itself, referred to as basic common information. The possible list of basic common information is shown in Table 5.

In the regrouping process, users with the same GID_REQ share some user-level information, referred to as optional common information. A possible list of optional common information is shown in Table 9.

**Table 9**

| IE | Description | Grouping Criteria |
|---|---|---|
| RRM Configuration | Used to indicate the candidate cell information for user measurements, configuration of measurement occasion, etc. | Users with adjacent geographical locations and similar RFs may share some configurations in this parameter |
| User RAT Access | Used to indicate the radio access technologies | Users with similar attributes, such as some contemporaneous smartphone |
| Capability | applicable to the users | users, may share this parameter configuration |
| User Measurement Report | Used to indicate the measurement results of the downlink received signal strength by the user | Users with adjacent geographical locations and similar scattering environments may share this parameter |

In this embodiment, there is a significant amount of information shared among users. Therefore, many parts of the user-level information for each user are set to null, resulting in a smaller size for the portion carrying the users' RRC information. This makes it suitable to adopt a model where the initial sub-message carries only the common information part, while the remaining sub-messages carry the user-level information of the plurality of users. The format of the initial sub-message may refer to the first sub-message 1010 shown in FIG. 10.

In the handover request message group, user-special information corresponds to unique and non-shared information for each user, and the pieces of information are sequentially arranged, with each field corresponding to a user. The possible user-special information is shown in Table 4.

Sub-messages carrying respective users' user-level information are sent to the target base station. It is still assumed that a size of a single message does not exceed an RRC message size in the original handover request. However, since the size of the user information is relatively small, each sub-message is able to carry RRC messages for M users. The format of the remaining sub-messages may refer to the second sub-message 1020 shown in FIG. 10.

After receiving the handover request acknowledgement messages for the users, the source cell side parses out the information required to make the handover decision for each user, thus completing the process of the handover preparation phase.

The above description, in conjunction with the plurality of embodiments, describes how to improve the signaling interaction during the handover preparation phase as defined in relevant standards in embodiments of the present application. The embodiments of the present application improve the interaction of the single user handover request and acknowledgement into a scheme suitable for the group user handover request and acknowledgement in NTN satellite networks, based on the idea of users sharing the same information. Through this method, the original message is restructured to generate a message group for signaling interaction between source and target network devices during the handover preparation phase, where the size of each sub-message in the message group may be flexibly adjusted based on different situations.

The embodiments of the present application help reduce the signaling overhead when the plurality of terminal devices perform cell handovers simultaneously. FIG. 21 provides a comparative diagram of the related technology and the embodiments of the present application. As shown in FIG. 21, in the related technology shown at the left side of FIG. 21, each terminal device (UE1, UE2, ...) corresponds to a handover request/acknowledgement, while the right side shows the group handover requests/acknowledgements after embodiments of the present application are applied. In the related technology, the number of signaling messages for NTN cell handovers increases dramatically. In contrast, the embodiments of the present application generate the handover request/acknowledgement message group based on the shared information from the two grouping operations. In the message group, information from the plurality of terminal devices is flexibly merged to reduce signaling overhead. For example, due to that the shared information is extracted for separate transmission, signaling overhead may be reduced, and the user-level information for each terminal device may be partially saved compared to that in the original case, resulting in lower space occupancy. Furthermore, the reduced information for different users may be merged in a single sub-message within the message group and then transmitted, but the specific number of users that a single sub-message is specifically able to carry needs to be determined based on the size limit and the amount of shared information. Overall, the message group in embodiments of the present application can outperform the original scheme of carrying single-user information in a single message in terms of total message size and number.

The method embodiments of the present application are described in detail above with reference to FIG. 1 to FIG. 21. Apparatus embodiments of the present application are described in detail below with reference to FIG. 22 to FIG. 25. It should be understood that the descriptions of the apparatus embodiments correspond to the descriptions of the method embodiments, and therefore, reference may be made to the foregoing method embodiments for parts that are not described in detail.

FIG. 22 is a schematic block diagram of a network device according to an embodiment of the present application. The apparatus 2200 may be any source network device described above. The apparatus 2200 shown in FIG. 22 includes a determining unit 2210 and a sending unit 2220.

The determining unit 2210 may be configured to determine a first terminal device group in a first terminal device set that executes a cell handover, where the first terminal device set includes one or more first terminal device groups.

The sending unit 2220 may be configured to send a first message group to a target network device, where the first message group is used to indicate handover requests of all terminal devices in the first terminal device group. The first message group includes second common information related to the terminal devices in the first terminal device group and first common information related to one or more of a source cell corresponding to the source network device or a target cell corresponding to the target network device.

Optionally, the first message group includes at least one sub-message, where each of the at least one sub-message includes first identity information corresponding to the first terminal device group and second identity information corresponding to the source cell.

Optionally, the first message group includes a first sub-message and a second sub-message, where the first sub-message is a sub-message preferentially sent in the first message group, and the first sub-message includes the first common information and the second common information.

Optionally, the first common information includes cell configuration information of the source cell and a message attribute related to the first common information, where the cell configuration information includes second identity information corresponding to the source cell, and the second sub-message includes the message attribute related to the first common information and the second identity information in the first common information.

Optionally, the first message group further includes exclusive information of all the terminal devices in the first terminal device group, and the exclusive information is used by the target network device to determine handover requests of all the terminal devices in the first terminal device group.

Optionally, the first message group includes at least one sub-message, where if one of the at least one sub-message includes terminal device exclusive information, the one of the at least one sub-message includes exclusive information of M terminal devices in the first terminal device group, where M is a natural number greater than or equal to 1.

Optionally, the apparatus 2200 further includes a first receiving unit, configured to receive a second message group sent by the target network device, where the second message group is used by the target network device to indicate handover request acknowledgements of all the terminal devices in the first terminal device group.

Optionally, the second message group is determined according to an admission control determination of the target network device, where the first common information is used by the target network device to perform a first admission control determination, the second common information is used by the target network device to perform a second admission control determination, and exclusive information of each of the terminal devices in the first message group is used by the target network device to perform a third admission control determination.

Optionally, the sending unit is further configured to send first grouping information to each of terminal devices in the first terminal device set, where the first grouping information is used to indicate first terminal device groups to which the terminal devices belong.

Optionally, the determining unit is further configured to determine the first grouping information before receiving measurement reports from the terminal devices, and the first grouping information is sent via signaling related to the measurement reports.

Optionally, the apparatus 2200 further includes an indicating unit, configured to instruct any terminal device in the first terminal device group to send a first measurement report according to the first grouping information, where the first measurement report is used to indicate measurement values of all the terminal devices in the first terminal device group.

Optionally, the sending unit is further configured to send the first grouping information via separate signaling before sending the first message group to the target network device.

Optionally, the sending unit is further configured to send the first grouping information according to handover request acknowledgements that are received, where the handover request acknowledgements are used to indicate whether each of the terminal devices in the first terminal device group initiates the handover, and the first grouping information is sent via handover initiation messages corresponding to the terminal devices.

Optionally, the sending unit is further configured to send second grouping information via broadcasting, and the second grouping information is used by terminal devices in the first terminal device set to determine first terminal device groups to which the terminal devices belong; and the apparatus 2200 further includes a second receiving unit, configured to receive grouping situations reported by the terminal devices.

Optionally, the source cell includes one or more first terminal device sets, and the one or more terminal device sets are determined according to one or more of: a target cell corresponding to a terminal device in the source cell; or a time at which the terminal device in the source cell executes the cell handover.

Optionally, the one or more first terminal device groups are determined according to one or more of: a geographical location of a terminal device in the first terminal device set; a radio frequency range supported by the terminal device in the first terminal device set; a type of the terminal device in the first terminal device set; or a capability of the terminal device in the first terminal device set to access different access networks.

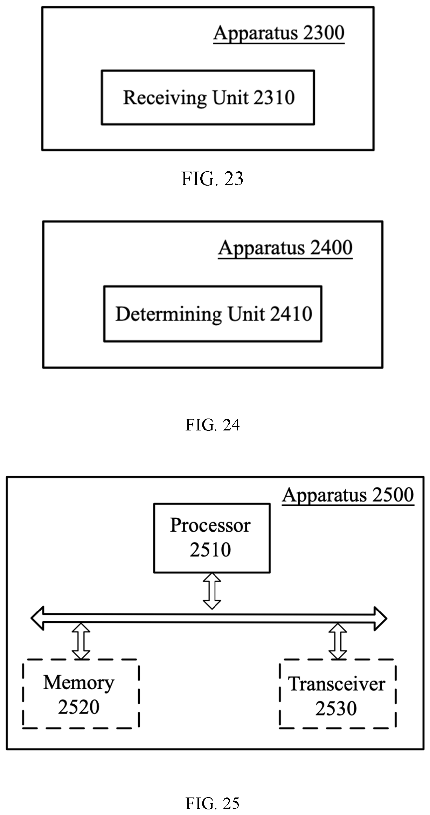

FIG. 23 is a schematic block diagram of another network device according to an embodiment of the present application. The apparatus 2300 may be any target network device described above. The apparatus 2300 shown in FIG. 23 includes a receiving unit 2310.

The receiving unit 2310 may be configured to receive a first message group sent by a source network device, where the first message group is used to indicate handover requests of all terminal devices in a first terminal device group, the first terminal device group is any terminal device group in a first terminal device set that executes a cell handover, and the first terminal device set includes one or more first terminal device groups, where the first message group includes second common information related to the terminal devices in the first terminal device group and first common information related to one or more of a source cell corresponding to the source network device or a target cell corresponding to the target network device.

Optionally, the first message group includes at least one sub-message, and each of the at least one sub-message includes first identity information corresponding to the first terminal device group and second identity information corresponding to the source cell.

Optionally, the first message group includes a first sub-message and a second sub-message, the first sub-message is a sub-message preferentially sent in the first message group, and the first sub-message includes the first common information and the second common information.

Optionally, the first common information includes cell configuration information of the source cell and a message attribute related to the first common information, the cell configuration information includes second identity information corresponding to the source cell, and the second sub-message includes the message attribute related to the first common information and the second identity information in the first common information.

Optionally, the first message group further includes exclusive information of all the terminal devices in the first terminal device group, and the exclusive information is used by the target network device to determine handover requests of all the terminal devices in the first terminal device group.

Optionally, the first message group includes at least one sub-message, where if one of the at least one sub-message includes terminal device exclusive information, the one of the at least one sub-message includes exclusive information of M terminal devices in the first terminal device group, where M is a natural number greater than or equal to 1.

Optionally, the apparatus 2300 further includes a sending unit, configured to send a second message group to the source network device, where the second message group is used by the target network device to indicate handover request acknowledgements of all the terminal devices in the first terminal device group.

Optionally, the second message group is determined according to an admission control determination of the target network device, the first common information is used by the target network device to perform a first admission control determination, the second common information is used by the target network device to perform a second admission control determination, and exclusive information of each of the terminal devices in the first message group is used by the target network device to perform a third admission control determination.

Optionally, the source cell includes one or more first terminal device sets, and the one or more terminal device sets are determined according to one or more of: a target cell corresponding to a terminal device in the source cell; and a time at which the terminal device in the source cell executes the cell handover.

Optionally, the one or more first terminal device groups are determined according to one or more of: a geographical location of a terminal device in the first terminal device set; a radio frequency range supported by the terminal device in the first terminal device set; a type of the terminal device in the first terminal device set; or a capability of the terminal device in the first terminal device set to access different access networks.

FIG. 24 is a schematic block diagram of a terminal device according to an embodiment of the present application. The apparatus 2400 may be any terminal device described above. The apparatus 2400 shown in FIG. 24 includes a determining unit 2410.

The determining unit 2410 may be configured to determine a first terminal device group to which the terminal device belongs, where the terminal device executes a cell handover from a source cell corresponding to a source network device to a target cell corresponding to a target network device, the first terminal device group is any terminal device group in a first terminal device set that executes the cell handover, and the first terminal device set includes one or more first terminal device groups.

Optionally, the apparatus 2400 further includes a first receiving unit, configured to receive first grouping information sent by the source network device, where the first grouping information is used to indicate the first terminal device group to which the terminal device belongs.

Optionally, the first grouping information is determined before the source network device receives a measurement report from the terminal device, and the first grouping information is sent via signaling related to the measurement report.

Optionally, the apparatus 2400 further includes a first sending unit, configured to send a first measurement report according to an indication of the source network device, where the first measurement report is used to indicate measurement values of all terminal devices in the first terminal device group.

Optionally, the first receiving unit is further configured to receive first grouping information sent by the source network device via separate signaling, and the separate signaling is sent before the source network device sends a handover request to the target network device.

Optionally, the first receiving unit is further configured to receive a handover initiation message sent by the source network device, the handover initiation message includes the first grouping information, the handover initiation message is determined according to a handover request acknowledgement received by the source network device, and the handover request acknowledgement is used to indicate whether each terminal device in the first terminal device group initiates a handover.

Optionally, the apparatus 2400 further includes a second receiving unit, configured to receive second grouping information via broadcasting, where the second grouping information is used by the terminal device to determine the first terminal device group to which the terminal device belongs; and a second sending unit, configured to report the first terminal device group to the source network device.

Optionally, the one or more first terminal device groups are determined according to one or more of: a geographical location of the terminal device in the first terminal device set; a radio frequency range supported by the terminal device in the first terminal device set; a type of the terminal device in the first terminal device set; or a capability of the terminal device in the first terminal device set to access different access networks.

FIG. 25 is a schematic structural diagram of an apparatus for communication according to an embodiment of the present application. The dashed line in FIG. 25 indicates that the unit or module is optional. The apparatus 2500 may be configured to implement the method described in the foregoing method embodiments. The apparatus 2500 may be a chip, a terminal device, or a network device.

The apparatus 2500 may include one or more processors 2510, and the processor 2510 may support the apparatus 2500 in implementing the method described in the foregoing method embodiments. The processor 2510 may be a general-purpose processor or a dedicated processor. For example, the processor may be a central processing unit (central processing unit, CPU). Alternatively, the processor may be another general-purpose processor, a digital signal processor (digital signal processor, DSP), an application specific integrated circuit (application specific integrated circuit, ASIC), a field programmable gate array (field programmable gate array, FPGA) or other programmable logic devices, a discrete gate or transistor logic device, a discrete hardware component, or the like. The general-purpose processor may be a microprocessor, or the processor may be any conventional processor or the like.

The apparatus 2500 may further include one or more memories 2520 storing a program, and the program may be executed by the processor 2510 to cause the processor 2510 to perform the method described in the foregoing method embodiments. The memory 2520 may be independent of the processor 2510 or may be integrated into the processor 2510.

The apparatus 2500 may further include a transceiver 2530, and the processor 2510 may communicate with another device or chip via the transceiver 2530. For example, the processor 2510 may perform data transmission and reception with another device or chip via the transceiver 2530.

Embodiments of the present application further provide a computer-readable storage medium, configured to store a program. The computer-readable storage medium may be applied to the terminal device or network device provided in the embodiments of the present application, and the program causes the computer to perform the method performed by the terminal device or network device in the embodiments of the present application.

The computer-readable storage medium may be any usable medium readable by a computer, or a data storage device, such as a server or a data center including one or more integrated usable media. The usable medium may be a magnetic medium (e.g., a floppy disk, a hard disk, or a magnetic tape), an optical medium (e.g., a digital video disk (DVD)), a semiconductor medium (e.g., a solid state disk (SSD)), or the like.

An embodiments of the present application further provides a computer program product. The computer program product includes a program. The computer program product may be applied to the terminal device or network device provided in the embodiments of the present application, and the program causes the computer to perform the method performed by the terminal or network device in the embodiments of the present application.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to the embodiments of the present application are all or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium, for example, the computer instructions may be transmitted from a website, a computer, a server, or a data center to another website, computer, server, or data center in a wired (e.g., a coaxial cable, an optical fiber, a digital subscriber line (DSL)) or a wireless (e.g., infrared, wireless, microwave, etc.) manner.

An embodiment of the present application further provides a computer program. The computer program may be applied to the terminal device or network device provided in embodiments of the present application, and the computer program causes the computer to perform the method performed by the terminal or network device in the embodiments of the present application.

The terms "system" and "network" in the present application may be used interchangeably. In addition, the terms used in the present application are merely used to explain specific embodiments of the present application and are not intended to limit the present application. In the description, claims, and accompanying drawings of the present application, the terms "first", "second", "third", "fourth", and the like are used to distinguish between different objects rather than describe a specific order. In addition, the terms "including" and "having" and any variations thereof are intended to cover non-exclusive inclusion.

The term "indication" mentioned in the embodiments of the present application may be a direct indication, or may be an indirect indication, or may indicate that there is an association relationship. For example, A indicates B, which may indicate that A directly indicates B, e.g., B is obtained through A, or may indicate that A indirectly indicates B, e.g., A indicates C and B is obtained through C, or may indicate that A and B have an association relationship.

In the embodiments of the present application, the term "corresponding" may indicate that there is a direct correspondence or indirect correspondence between the two, or may indicate that there is an association relationship between the two, or may be relationships such as indicating and being indicated, configuring and being configured, etc.

In the embodiments of the present application, the terms "predefined" or "preconfigured" may be implemented by pre-storing a corresponding code, a table, or another manner that may be used to indicate related information in a device (e.g., a terminal device and a network device), and a specific implementation is not limited in the present application. For example, the predefined may indicate being defined in a protocol.

In the embodiments of the present application, the term "protocol" in the embodiments of the present application may refer to a standard protocol in the field of communications, such as an LTE protocol, an NR protocol, and related protocols applied to a future communication system, which is not limited in the present application.

In the embodiments of the present application, determining B based on A does not mean that B is determined only based on A, or B may also be determined based on A and/or other information.

In the embodiments of the present application, the term "and/or" in this specification is merely an association relationship for describing associated objects, indicating that there are three relationships, e.g., A and/or B may indicate that A exists alone, A and B exist at the same time, and B exists alone. In addition, the character "/" in this specification generally indicates an "or" relationship between the associated objects.

In various embodiments of the present application, a size of a serial number of each process does not mean an execution sequence, and the execution sequence of each process should be determined by its function and internal logic but should not constitute any limitation on an implementation process of the embodiments of the present application.

In the several embodiments provided in the present application, it should be understood that the disclosed system, apparatus, and method may be implemented in other manners. For example, the apparatus embodiments described above are merely illustrative, and the division of the units is merely a logical function division. In actual implementation, there may be alternative division manners, such as combining a plurality of units or components or integrating them into another system, or ignoring or not executing some features. In addition, the shown or discussed mutual coupling or direct coupling or communication connection may be indirect coupling or communication connection through some interfaces, devices, or units, which may be electrical, mechanical, or in other forms.

The units described as separate parts may or may not be physically separate, and parts shown as units may or may not be physical units, i.e., may be located in one position, or may be distributed on a plurality of network units. Some or all of the units may be selected according to actual needs to achieve the objectives of the solutions of the embodiments.

In addition, functional units in the embodiments of the present application may be integrated into one processing unit, or each of the units may exist alone physically, or two or more units are integrated into one unit.

The foregoing descriptions are merely specific implementations of the present application, but the protection scope of the present application is not limited thereto, and any changes or substitutions may be easily conceived of by a person skilled in the art within the technical scope disclosed in the present application. Therefore, the protection scope of the present application shall be subject to the protection scope of the claims.

## Claims

1. A method for cell handover, applied to a handover from a source cell corresponding to a source network device to a target cell corresponding to a target network device, comprising:
determining, by the source network device, a first terminal device group in a first terminal device set that executes the cell handover, wherein the first terminal device set comprises one or more first terminal device groups; and
sending, by the source network device, a first message group to the target network device, wherein the first message group is used to indicate handover requests of all terminal devices in the first terminal device group,
wherein the first message group comprises second common information related to the terminal devices in the first terminal device group and first common information related to the source cell and/or the target cell.

2. The method according to claim 1, wherein the first message group comprises at least one sub-message, and each of the at least one sub-message comprises first identity information corresponding to the first terminal device group and second identity information corresponding to the source cell.

3. The method according to claim 1, wherein the first message group comprises a first sub-message and a second sub-message, the first sub-message is a sub-message preferentially sent in the first message group, and the first sub-message comprises the first common information and the second common information.

4. The method according to claim 3, wherein the first common information comprises cell configuration information of the source cell and a message attribute related to the first common information, the cell configuration information comprises second identity information corresponding to the source cell, and the second sub-message comprises the message attribute related to the first common information and the second identity information in the first common information.

5. The method according to any one of claims 1 to 4, wherein the first message group further comprises exclusive information of all the terminal devices in the first terminal device group, and the exclusive information is used by the target network device to determine handover requests of all the terminal devices in the first terminal device group.

6. The method according to claim 5, wherein the first message group comprises at least one sub-message; and in a case that one of the at least one sub-message comprises terminal device exclusive information, the one of the at least one sub-message comprises exclusive information of M terminal devices in the first terminal device group, wherein M is a natural number greater than or equal to 1.

7. The method according to any one of claims 1 to 6, further comprising:
receiving, by the source network device, a second message group sent by the target network device, wherein the second message group is used by the target network device to indicate handover request acknowledgements of all the terminal devices in the first terminal device group.

8. The method according to claim 7, wherein the second message group is determined according to an admission control determination of the target network device, the first common information is used by the target network device to perform a first admission control determination, the second common information is used by the target network device to perform a second admission control determination, and exclusive information of each of the terminal devices in the first message group is used by the target network device to perform a third admission control determination.

9. The method according to any one of claims 1 to 8, further comprising:
sending, by the source network device, first grouping information to each of terminal devices in the first terminal device set, wherein the first grouping information is used to indicate first terminal device groups to which the terminal devices belong.

10. The method according to claim 9, further comprising:
determining, by the source network device, the first grouping information before receiving measurement reports from the terminal devices, wherein the first grouping information is sent via signaling related to the measurement reports.

11. The method according to claim 10, further comprising:
instructing, by the source network device, any terminal device in the first terminal device group to send a first measurement report according to the first grouping information, wherein the first measurement report is used to indicate measurement values of all the terminal devices in the first terminal device group.

12. The method according to claim 9, further comprising:
sending, by the source network device, the first grouping information via separate signaling before sending the first message group to the target network device.

13. The method according to claim 9, further comprising:
sending, by the source network device, the first grouping information according to handover request acknowledgements that are received, the handover request acknowledgements are used to indicate whether each of the terminal devices in the first terminal device group initiates the handover, and the first grouping information is sent via handover initiation messages corresponding to the terminal devices.

14. The method according to any one of claims 1 to 8, further comprising:
sending, by the source network device, second grouping information via broadcasting, wherein the second grouping information is used by terminal devices in the first terminal device set to determine first terminal device groups to which the terminal devices belong; and
receiving, by the source network device, grouping situations reported by the terminal devices.

15. The method according to any one of claims 1 to 14, wherein the source cell comprises one or more first terminal device sets, and the one or more terminal device sets are determined according to one or more of:
a target cell corresponding to a terminal device in the source cell; or
a time at which the terminal device in the source cell executes the cell handover.

16. The method according to any one of claims 1 to 15, wherein the one or more first terminal device groups are determined according to one or more of:
a geographical location of a terminal device in the first terminal device set;
a radio frequency range supported by the terminal device in the first terminal device set;
a type of the terminal device in the first terminal device set; or
a capability of the terminal device in the first terminal device set to access different access networks.

17. A method for cell handover, applied to a handover from a source cell corresponding to a source network device to a target cell corresponding to a target network device, comprising:
receiving, by the target network device, a first message group sent by the source network device, wherein the first message group is used to indicate handover requests of all terminal devices in a first terminal device group, the first terminal device group is any terminal device group in a first terminal device set that executes the cell handover, and the first terminal device set comprises one or more first terminal device groups,
wherein the first message group comprises second common information related to the terminal devices in the first terminal device group and first common information related to the source cell and/or the target cell.

18. The method according to claim 17, wherein the first message group comprises at least one sub-message, and each of the at least one sub-message comprises first identity information corresponding to the first terminal device group and second identity information corresponding to the source cell.

19. The method according to claim 17, wherein the first message group comprises a first sub-message and a second sub-message, the first sub-message is a sub-message preferentially sent in the first message group, and the first sub-message comprises the first common information and the second common information.

20. The method according to claim 19, wherein the first common information comprises cell configuration information of the source cell and a message attribute related to the first common information, the cell configuration information comprises second identity information corresponding to the source cell, and the second sub-message comprises the message attribute related to the first common information and the second identity information in the first common information.

21. The method according to any one of claims 17 to 20, wherein the first message group further comprises exclusive information of all the terminal devices in the first terminal device group, and the exclusive information is used by the target network device to determine handover requests of all the terminal devices in the first terminal device group.

22. The method according to claim 21, wherein the first message group comprises at least one sub-message; and in a case that one of the at least one sub-message comprises terminal device exclusive information, the one of the at least one sub-message comprises exclusive information of M terminal devices in the first terminal device group, wherein M is a natural number greater than or equal to 1.

23. The method according to any one of claims 17 to 22, further comprising:
sending, by the target network device, a second message group to the source network device, wherein the second message group is used by the target network device to indicate handover request acknowledgements of all the terminal devices in the first terminal device group.

24. The method according to claim 23, wherein the second message group is determined according to an admission control determination of the target network device, the first common information is used by the target network device to perform a first admission control determination, the second common information is used by the target network device to perform a second admission control determination, and exclusive information of each of the terminal devices in the first message group is used by the target network device to perform a third admission control determination.

25. The method according to any one of claims 17 to 24, wherein the source cell comprises one or more first terminal device sets, and the one or more terminal device sets are determined according to one or more of:
a target cell corresponding to a terminal device in the source cell; or
a time at which the terminal device in the source cell executes the cell handover.

26. The method according to any one of claims 17 to 25, wherein the one or more first terminal device groups are determined according to one or more of:
a geographical location of a terminal device in the first terminal device set;
a radio frequency range supported by the terminal device in the first terminal device set;
a type of the terminal device in the first terminal device set; or
a capability of the terminal device in the first terminal device set to access different access networks.

27. A method for cell handover, applied to a handover from a source cell corresponding to a source network device to a target cell corresponding to a target network device, comprising:
determining, by a terminal device, a first terminal device group to which the terminal device belongs, wherein the first terminal device group is any terminal device group in a first terminal device set that executes the cell handover, and the first terminal device set comprises one or more first terminal device groups.

28. The method according to claim 27, further comprising:
receiving, by the terminal device, first grouping information sent by the source network device, wherein the first grouping information is used to indicate the first terminal device group to which the terminal device belongs.

29. The method according to claim 28, wherein the first grouping information is determined before the source network device receives a measurement report from the terminal device, and the first grouping information is sent via signaling related to the measurement report.

30. The method according to claim 29, further comprising:
sending, by the terminal device, a first measurement report according to an indication of the source network device, wherein the first measurement report is used to indicate measurement values of all terminal devices in the first terminal device group.

31. The method according to claim 28, further comprising:
receiving, by the terminal device, the first grouping information sent by the source network device via separate signaling, wherein the separate signaling is sent before the source network device sends a handover request to the target network device.

32. The method according to claim 28, further comprising:
receiving, by the terminal device, a handover initiation message sent by the source network device, wherein the handover initiation message comprises the first grouping information, the handover initiation message is determined according to a handover request acknowledgement received by the source network device, and the handover request acknowledgement is used to indicate whether each terminal device in the first terminal device group initiates the handover.

33. The method according to claim 27, further comprising:
receiving, by the terminal device, second grouping information via broadcasting, wherein the second grouping information is used by the terminal device to determine the first terminal device group to which the terminal device belongs; and
reporting, by the terminal device, the first terminal device group to the source network device.

34. The method according to any one of claims 27 to 33, wherein the one or more first terminal device groups are determined according to one or more of:
a geographical location of the terminal device in the first terminal device set;
a radio frequency range supported by the terminal device in the first terminal device set;
a type of the terminal device in the first terminal device set; or
a capability of the terminal device in the first terminal device set to access different access networks.

35. A network device, wherein the network device is a source network device, and the source network device comprises:
a determining unit, configured to determine a first terminal device group in a first terminal device set that executes a cell handover, wherein the first terminal device set comprises one or more first terminal device groups; and
a sending unit, configured to send a first message group to a target network device, wherein the first message group is used to indicate handover requests of all terminal devices in the first terminal device group,
wherein the first message group comprises second common information related to the terminal devices in the first terminal device group and first common information related to one or more of a source cell corresponding to the source network device or a target cell corresponding to the target network device.

36. The network device according to claim 35, wherein the first message group comprises at least one sub-message, and each of the at least one sub-message comprises first identity information corresponding to the first terminal device group and second identity information corresponding to the source cell.

37. The network device according to claim 35, wherein the first message group comprises a first sub-message and a second sub-message, the first sub-message is a sub-message preferentially sent in the first message group, and the first sub-message comprises the first common information and the second common information.

38. The network device according to claim 37, wherein the first common information comprises cell configuration information of the source cell and a message attribute related to the first common information, the cell configuration information comprises second identity information corresponding to the source cell, and the second sub-message comprises the message attribute related to the first common information and the second identity information in the first common information.

39. The network device according to any one of claims 35 to 38, wherein the first message group further comprises exclusive information of all the terminal devices in the first terminal device group, and the exclusive information is used by the target network device to determine handover requests of all the terminal devices in the first terminal device group.

40. The network device according to claim 39, wherein the first message group comprises at least one sub-message; and in a case that one of the at least one sub-message comprises terminal device exclusive information, the one of the at least one sub-message comprises exclusive information of M terminal devices in the first terminal device group, wherein M is a natural number greater than or equal to 1.

41. The network device according to any one of claims 35 to 40, wherein the source network device further comprises:
a first receiving unit, configured to receive a second message group sent by the target network device, wherein the second message group is used by the target network device to indicate handover request acknowledgements of all the terminal devices in the first terminal device group.

42. The network device according to claim 41, wherein the second message group is determined according to an admission control determination of the target network device, the first common information is used by the target network device to perform a first admission control determination, the second common information is used by the target network device to perform a second admission control determination, and exclusive information of each of the terminal devices in the first message group is used by the target network device to perform a third admission control determination.

43. The network device according to any one of claims 35 to 42, wherein the sending unit is further configured to send first grouping information to each of terminal devices in the first terminal device set, wherein the first grouping information is used to indicate first terminal device groups to which the terminal devices belong.

44. The network device according to claim 43, wherein the determining unit is further configured to determine the first grouping information before receiving measurement reports from the terminal devices, and the first grouping information is sent via signaling related to the measurement reports.

45. The network device according to claim 44, wherein the source network device further comprises:
an indicating unit, configured to indicate any terminal device in the first terminal device group to send a first measurement report according to the first grouping information, wherein the first measurement report is used to indicate measurement values of all the terminal devices in the first terminal device group.

46. The network device according to claim 43, wherein the sending unit is further configured to send the first grouping information via separate signaling before sending the first message group to the target network device.

47. The network device according to claim 43, wherein the sending unit is further configured to send the first grouping information according to handover request acknowledgements that are received, the handover request acknowledgements are used to indicate whether each of the terminal devices in the first terminal device group initiates the handover, and the first grouping information is sent via handover initiation messages corresponding to the terminal devices.

48. The network device according to any one of claims 35 to 42, wherein the sending unit is further configured to send second grouping information via broadcasting, and the second grouping information is used by terminal devices in the first terminal device set to determine first terminal device groups to which the terminal devices belong; and
wherein the source network device further comprises:
a second receiving unit, configured to receive grouping situations reported by the terminal devices.

49. The network device according to any one of claims 35 to 48, wherein the source cell comprises one or more first terminal device sets, and the one or more terminal device sets are determined according to one or more of:
a target cell corresponding to a terminal device in the source cell; or
a time at which the terminal device in the source cell executes the cell handover.

50. The network device according to any one of claims 35 to 49, wherein the one or more first terminal device groups are determined according to one or more of:
a geographical location of a terminal device in the first terminal device set;
a radio frequency range supported by the terminal device in the first terminal device set;
a type of the terminal device in the first terminal device set; or
a capability of the terminal device in the first terminal device set to access different access networks.

51. A network device, wherein the network device is a target network device, and the target network device comprises:
a receiving unit, configured to receive a first message group sent by a source network device, wherein the first message group is used to indicate handover requests of all terminal devices in a first terminal device group, the first terminal device group is any terminal device group in a first terminal device set that executes a cell handover, and the first terminal device set comprises one or more first terminal device groups,
wherein the first message group comprises second common information related to the terminal devices in the first terminal device group and first common information related to one or more of a source cell corresponding to the source network device or a target cell corresponding to the target network device.

52. The network device according to claim 51, wherein the first message group comprises at least one sub-message, and each of the at least one sub-message comprises first identity information corresponding to the first terminal device group and second identity information corresponding to the source cell.

53. The network device according to claim 51, wherein the first message group comprises a first sub-message and a second sub-message, the first sub-message is a sub-message preferentially sent in the first message group, and the first sub-message comprises the first common information and the second common information.

54. The network device according to claim 53, wherein the first common information comprises cell configuration information of the source cell and a message attribute related to the first common information, the cell configuration information comprises second identity information corresponding to the source cell, and the second sub-message comprises the message attribute related to the first common information and the second identity information in the first common information.

55. The network device according to any one of claims 51 to 54, wherein the first message group further comprises exclusive information of all the terminal devices in the first terminal device group, and the exclusive information is used by the target network device to determine handover requests of all the terminal devices in the first terminal device group.

56. The network device according to claim 55, wherein the first message group comprises at least one sub-message; and in a case that one of the at least one sub-message comprises terminal device exclusive information, the one of the at least one sub-message comprises exclusive information of M terminal devices in the first terminal device group, wherein M is a natural number greater than or equal to 1.

57. The network device according to any one of claims 51 to 56, wherein the target network device further comprises:
a sending unit, configured to send a second message group to the source network device, wherein the second message group is used by the target network device to indicate handover request acknowledgements of all the terminal devices in the first terminal device group.

58. The network device according to claim 57, wherein the second message group is determined according to an admission control determination of the target network device, the first common information is used by the target network device to perform a first admission control determination, the second common information is used by the target network device to perform a second admission control determination, and exclusive information of each of the terminal devices in the first message group is used by the target network device to perform a third admission control determination.

59. The network device according to any one of claims 51 to 58, wherein the source cell comprises one or more first terminal device sets, and the one or more terminal device sets are determined according to one or more of:
a target cell corresponding to a terminal device in the source cell; or
a time at which the terminal device in the source cell executes the cell handover.

60. The network device according to any one of claims 51 to 59, wherein the one or more first terminal device groups are determined according to one or more of:
a geographical location of a terminal device in the first terminal device set;
a radio frequency range supported by the terminal device in the first terminal device set;
a type of the terminal device in the first terminal device set; or
a capability of the terminal device in the first terminal device set to access different access networks.

61. A terminal device, comprising:
a determining unit, configured to determine a first terminal device group to which the terminal device belongs, wherein the terminal device executes a cell handover from a source cell corresponding to a source network device to a target cell corresponding to a target network device, the first terminal device group is any terminal device group in a first terminal device set that executes the cell handover, and the first terminal device set comprises one or more first terminal device groups.

62. The terminal device according to claim 61, further comprising:
a first receiving unit, configured to receive first grouping information sent by the source network device, wherein the first grouping information is used to indicate the first terminal device group to which the terminal device belongs.

63. The terminal device according to claim 62, wherein the first grouping information is determined before the source network device receives a measurement report from the terminal device, and the first grouping information is sent via signaling related to the measurement report.

64. The terminal device according to claim 63, further comprising:
a first sending unit, configured to send a first measurement report according to an indication of the source network device, wherein the first measurement report is used to indicate measurement values of all terminal devices in the first terminal device group.

65. The terminal device according to claim 62, wherein the first receiving unit is further configured to receive first grouping information sent by the source network device via separate signaling, and the separate signaling is sent before the source network device sends a handover request to the target network device.

66. The terminal device according to claim 62, wherein the first receiving unit is further configured to receive a handover initiation message sent by the source network device, the handover initiation message comprises the first grouping information, the handover initiation message is determined according to a handover request acknowledgement received by the source network device, and the handover request acknowledgement is used to indicate whether each terminal device in the first terminal device group initiates a handover.

67. The terminal device according to claim 61, further comprising:
a second receiving unit, configured to receive second grouping information via broadcasting, wherein the second grouping information is used by the terminal device to determine the first terminal device group to which the terminal device belongs; and
a second sending unit, configured to report the first terminal device group to the source network device.

68. The terminal device according to any one of claims 61 to 67, wherein the one or more first terminal device groups are determined according to one or more of:
a geographical location of the terminal device in the first terminal device set;
a radio frequency range supported by the terminal device in the first terminal device set;
a type of the terminal device in the first terminal device set; or
a capability of the terminal device in the first terminal device set to access different access networks.

69. An apparatus for communication, comprising a memory and a processor, wherein the memory is configured to store a program, and the processor is configured to invoke the program in the memory to perform the method according to any one of claims 1 to 34.

70. An apparatus, comprising a processor, wherein the processor is configured to invoke a program from a memory to perform the method according to any one of claims 1 to 34.

71. A chip, comprising a processor, wherein the processor is configured to invoke a program from a memory to cause a device on which the chip is installed to perform the method according to any one of claims 1 to 34.

72. A computer-readable storage medium storing a program, wherein the program causes a computer to perform the method according to any one of claims 1 to 34.

73. A computer program product, comprising a program, wherein the program causes a computer to perform the method according to any one of claims 1 to 34.

74. A computer program, wherein the computer program causes a computer to perform the method according to any one of claims 1 to 34.
